# EUROPEAN PATENT SPECIFICATION

(11) **EP 4 250 609 B1**
(45) Date of publication and mention of the grant of the patent: **25.02.2026**
(21) Application number: 21902345.4
(22) Date of filing: 17.11.2021
(51) Int. Cl.: H04L 69/22, H04L 45/28, H04L 45/741, H04L 43/0811, H04L 43/0829, H04L 43/0852, H04L 43/087, H04L 43/10

(54) **PACKET PROCESSING METHOD AND DEVICE**
PAKETVERARBEITUNGSVERFAHREN UND -VORRICHTUNG
PROCÉDÉ ET DISPOSITIF DE TRAITEMENT DE PAQUETS

(30) Priority: 11.12.2020 CN 202011463979; 10.02.2021 CN 202110183765
(43) Date of publication of application: 27.09.2023
(73) Proprietor: Huawei Technologies Co., Ltd., Shenzhen, Guangdong 518129 (CN)
(72) Inventor: YANG, Fan, Shenzhen, Guangdong 518129 (CN); WANG, Yali, Shenzhen, Guangdong 518129 (CN); ZHOU, Tianran, Shenzhen, Guangdong 518129 (CN)
(74) Representative: Gill Jennings & Every LLP
(86) International application number: PCT/CN2021/131088
(87) International publication number: WO 2022/121638

(56) References cited:
- CN-A- 102 088 391
- CN-A- 102 594 626
- CN-A- 105 763 659
- US-A1- 2011 090 909
- US-A1- 2016 094 433
- BOCCI M ET AL: "MPLS Generic Associated Channel; rfc5586.txt", MPLS GENERIC ASSOCIATED CHANNEL; RFC5586.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 June 2009 (2009-06-01), XP015065601
- MIRSKY X MIN ZTE CORP S BOUTROS CIENA D BLACK DELL EMC S PALLAGATTI G ET AL: "OAM for use in GENEVE; draft-mmbb-nvo3-geneve-oam-02.txt", no. 2, 10 March 2020 (2020-03-10), pages 1 - 9, XP015138631, Retrieved from the Internet <URL:https://tools.ietf.org/html/draft-mmbb-nvo3-geneve-oam-02> [retrieved on 20200310]

## Description

This application claims priority to the following patent applications, and the entire content of which is incorporated herein by reference.
1. Chinese Patent Application No. 202011463979.8, filed with the China National Intellectual Property Administration on December 11, 2020 and entitled "COMMUNICATION METHOD AND DEVICE".
2. Chinese Patent Application No. 202110183765.3, filed with the China National Intellectual Property Administration on February 10, 2021 and entitled "PACKET PROCESSING METHOD AND APPARATUS".

### TECHNICAL FIELD

This application relates to the communication field, and in particular, to a packet processing method and apparatus.

### BACKGROUND

To perform control and management on an Internet Protocol version 6 (Internet Protocol version 6, IPv6) network, a control and management message may be transmitted between nodes in the IPv6 network. For example, a control and management message may be transmitted between a head node and a tail node on a transmission path. A node that receives the control and management message may perform a corresponding operation based on the control and management message, implementing control and management on the IPv6 network. One type of control and management message may implement one type control and management function. The control and management on the IPv6 network covers a plurality of aspects, for example, determining latency and packet loss of a transmission path; for another example, testing connectivity of a transmission path; and for another example, performing resource management on a transmission path.

Currently, a protocol needs to be independently designed for each control and management function to carry a control and management message. As a result, a plurality of protocol links need to be established between nodes in the IPv6 network to perform control and management of different functions on the IPv6 network. It is complex to transmit various control and management messages in this manner. Consequently, efficiency of performing control and management on the IPv6 network is low.

BOCCI M ET AL: "MPLS Generic Associated Channel; rfc5586.txt", MPLS GENERIC ASSOCIATED CHANNEL; RFC5586.TXT, INTERNET ENGINEERING TASK FORCE, IETF; STANDARD, INTERNET SOCIETY (ISOC) 4 relates to the applicability of the pseudowire (PW) Associated Channel Header (ACH), enabling the realization of a control channel associated to MPLS Label Switched Paths (LSPs) and MPLS Sections in addition to MPLS pseudowires.

US 2011/0090909 A1 discloses a system which advertises a multifunctional control channel (MFCC) in an interface parameter sub-type-length-value (TLV) of an advertisement label mapping message that is dispatched to a network device. The system also processes a reply label mapping message that is transmitted from the network device in response to the advertisement label mapping message and updates a label information base to establish a pseudowire and a MFCC associated with the pseudowire.

MIRSKY X MIN ZTE CORP S BOUTROS CIENA D BLACK DELL EMC S PALLAGATTI GET AL: "OAM for use in GENEVE; draftmmbb-nvo3-geneve-oam-02. txt", OAM FOR USE IN GENEVE; DRAFT-MMBB-NVO3-GENEVEOAM-02.TXT; INTERNET-DRAFT: NVO3 WORKING GROUP, INTERNET ENGINEERING TASK FORCE, IETF; STANDARDWORKINGDRAFT, INTERNET SOCIETY (ISOC) 4 defines encapsulation for active Operations, Administration, and Maintenance protocols in Geneve protocol. Also, the format and operation of the Echo Request and Echo Reply mechanism in Geneve are defined.

### SUMMARY

An embodiment of this application provides a packet processing method, to implement control and management on an IPv6 network. The scope of protection of the invention is defined in the appended claims. The following aspects are provided as exemplary implementations of the invention and do not affect its scope of protection.

According to a first aspect, an embodiment of this application provides a packet processing method, and the method may be performed by, for example, a first communication apparatus. The first communication apparatus may correspond to a head node or an intermediate node on a transmission path of a first IPv6 packet. In an example, the first communication apparatus may obtain a first IPv6 packet, and the first IPv6 packet includes an associated channel. The associated channel can carry different types of control channels, each type of control channel can carry at least one type of control and management message, and one type of control and management message can implement one type of control and management function. The control and management message may be, for example, a protocol message. In other words, the first IPv6 packet includes at least one type of control and management message. After obtaining the first IPv6 packet, the first communication apparatus may forward the first IPv6 packet.

In this application, a general associated channel is designed in an IPv6 packet, and various different types of control channels can be carried by using the associated channel. Therefore, if a plurality of control and management functions need to be implemented for an IPv6 network, one general associated channel may carry different types of control channels, that is, one general associated channel may carry a plurality of types of control and management messages, without using a plurality of protocols to carry the plurality of types of control and management messages. Therefore, a quantity of control and management signaling between network devices is reduced, a transmission manner of the control and management signaling is simplified, and some new control and management channels can be supported in an IP network. For example, a signaling communication channel SCC, a management communication channel MCC, and a fault indication channel in embodiments of this application can be supported, improving efficiency of control and management on the IPv6 network. An associated channel carries control and management messages of a plurality of protocols, so that a plurality of TLV fields can be carried by using one packet to reduce a quantity of packets transmitting control and management information between devices. In a possible implementation, the associated channel may be a general TLV format, and TLV encapsulation is performed in an IPv6 extension header, to unify and simplify a packet encapsulation and transmission manner of a control and management message, and reduce a device maintenance parameter, for example, a user datagram protocol port number entry. Further, based on the associated channel in this application, transmission of a control and management message in a TLV format with a variable value length may be further supported by extension. Therefore, more channel maintenance information may be carried. Based on the solution provided in this embodiment of this application, message transmission is performed by using an IPv6 packet header, so that fast path processing may be performed on a device forwarding plane for content of the packet header, improving the message processing efficiency.

In an implementation, the associated channel in this application may be carried in an IPv6 extension header. Therefore, sending of the associated channel along with user data may be supported, implementing in-situ flow information telemetry.

In an implementation, the associated channel in this application may alternatively be carried in a payload of an IPv6 packet.

In an implementation, if the first communication apparatus corresponds to the head node on the transmission path of the first IPv6 packet, the first communication apparatus may generate the first IPv6 packet.

In a specific implementation, the transmission path is an IPv6 tunnel, for example, may be an IP-encapsulated virtual extensible local area network (virtual extensible local area network, VXLAN) tunnel, or may be an SRv6 tunnel.

In an implementation, if the first communication apparatus corresponds to the intermediate node on the transmission path of the first IPv6 packet, during specific implementation, when the first communication apparatus obtains the first IPv6 packet, for example, the first communication apparatus may receive a second IPv6 packet from an upstream node of the first communication apparatus, where the second IPv6 packet includes the associated channel. After receiving the second IPv6 packet, the first communication apparatus may process the second IPv6 packet based on the associated channel, to obtain the first IPv6 packet. For example, the first communication apparatus may add corresponding information (for example, a local timestamp) to the second IPv6 packet based on the at least one type of control and management message carried in the associated channel, to obtain the first IPv6 packet. Based on the method in this application, the intermediate node can parse the associated channel. For example, the intermediate node may record related OAM detection information, resource reservation information, or fault indication information into the associated channel. Therefore, more refined control and management can be implemented.

According to a second aspect, an embodiment of this application provides a packet processing method. The method may be, for example, performed by a first communication apparatus, and the first communication apparatus may correspond to, for example, a tail node on a transmission path of a first IPv6 packet. In an example, the first communication apparatus may receive a first IPv6 packet, where the first IPv6 packet includes an associated channel, the associated channel can carry different types of control channels, and each type of control channel carries at least one type of control and management message. After receiving the first IPv6 packet, the first communication apparatus may perform an operation corresponding to the at least one type of control and management message. Because the first IPv6 packet includes an associated channel, if a plurality of control and management functions need to be implemented for an IPv6 network, a plurality of types of control and management messages may be carried by using the associated channel, without using a plurality of protocols to carry the plurality of types of control and management messages, improving efficiency of control and management on the IPv6 network. In addition, there is no need to run a plurality of protocols between nodes on the transmission path of the first IPv6 packet. Therefore, bandwidth occupied by running the plurality of protocols are reduced, and the service data transmission efficiency is also improved correspondingly.

For the first aspect and the second aspect:
In an implementation, the associated channel may carry at least one control and management message, and the control and management message is a message for controlling and/or managing a path. To enable a node that receives the first IPv6 packet to determine a path associated with the associated channel, the first IPv6 packet may further include identification information, where the identification information is used for identifying a first path, and the first path is the transmission path of the first IPv6 packet. In this way, the node that receives the first IPv6 packet may identify an association relationship between the associated channel in the first IPv6 packet and the first path, so as to determine the at least one control and management message in the associated channel, for controlling and/or managing the first path. Further, the node that receives the first IPv6 packet may perform a corresponding operation based on the identification information and the at least one control and management message in the associated channel.

In an implementation, the foregoing identification information may be, for example, a path identifier path ID.

In an implementation, the foregoing identification information may identify an end-to-end path, or may identify a segment of path in an end-to-end path.

In an implementation, the identification information may be carried in the associated channel, or may be carried outside the associated channel.

In an implementation, if the first IPv6 packet is an SRv6 packet, because a segment list (segment list) included in an SRH of the SRv6 packet may indicate a transmission path of the SRv6 packet. Therefore, the identification information may be carried by using the segment list of the SRv6 packet, that is, the identification information may be the segment list of the SRv6 packet. In this implementation, hop-by-hop and end-to-end control and management of a specific node in an SRv6 transmission path may be implemented. For example, for OAM detection, hop-by-hop and end-to-end connectivity monitoring and performance measurement can be supported. For example, for resource reservation management, hop-by-hop resource reservation management can be supported.

In an implementation, for the SRv6 packet, the SRH of the SRv6 packet may further include a path segment (path segment) field, and a value of the path segment field is used for identifying an SRv6 path. When the first IPv6 packet used as an SRv6 packet includes a path segment field, a value of the path segment field is used for identifying a transmission path of the first IPv6 packet. Therefore, the identification information may alternatively be carried in the path segment field of the SRv6 packet.

In an implementation, in addition to including the associated channel, the extension header of the first IPv6 packet may further include indication information, where the indication information indicates the associated channel. In this case, the node that receives the first IPv6 packet may determine, based on the indication information, that the extension header of the first IPv6 packet includes the associated channel.

In an implementation, the extension header of the first IPv6 packet may be a hop-by-hop HBH option header. In this case, the HBH option header of the first IPv6 packet may include the associated channel. In addition, the extension header of the first IPv6 packet may also be a destination option header DOH. In this case, the DOH of the first IPv6 packet may include the associated channel.

In an implementation, if the first IPv6 packet is an SRv6 packet, the extension header of the first IPv6 packet may be an SRH. In this case, the SRH of the first IPv6 packet may include the associated channel. Certainly, if the first IPv6 packet is an SRv6 packet, the extension header of the first IPv6 packet may also be a DOH.

In an implementation, one TLV field may be extended to carry the foregoing indication information. In an implementation, if the TLV field carries the indication information, in an example, a type field of the TLV field may carry the indication information. In this way, another field of the TLV field may further carry other information, so that the TLV field can carry more information.

In an implementation, if the first IPv6 packet is an SRv6 packet, the indication information may also be carried by using an undefined field in the SRH of the SRv6 packet, for example, carried by using a flags field in the SRH. In this way, there is no need to extend a new field to carry the indication information, reducing extension of the SRv6 packet.

In an implementation, the TLV field may further include a channel type field, and the channel type field indicates a type of a control channel carried by the associated channel. In an example, a type field of the TLV field carries the foregoing indication information, and the indication information indicates that content carried in the TLV is the associated channel. A value field of the TLV field includes a channel type field, and the channel type field indicates a type of a control channel carried by the associated channel. When the associated channel carries a plurality of types of control channels, the value field of the TLV field may include a plurality of channel type fields, and the plurality of channel type fields are in a one-to-one correspondence with the plurality of types of control channels.

In an implementation, when the associated channel is carried by using a TLV field, if the associated channel carries a plurality of types of control channels, the TLV field may include indication information of each type of control channel, where the indication information of each type of control channel indicates a type of a control channel included in the TLV field. For example, the indication information of each type of control channel may be carried in a value field of the TLV field. The indication information of each control channel may be a value of an indication bit corresponding to each control channel, or may be a specific value indicating each control channel. This is not specifically limited in this embodiment of this application. For example, in the TLV field, if values of indication bits corresponding to a control channel 1 and a control channel 2 are both 1, and values of indication bits corresponding to other control channels are 0, it indicates that the TLV field includes the control channel 1 and the control channel 2. The indication bit mentioned herein may include, for example, one bit. In another example, if a value 1 is included in the value field of the TLV field, and the value 1 corresponds to a control channel 1, it indicates that the TLV field includes the control channel 1.

In an implementation, the at least one type of control channel carried by the associated channel may include, for example, one or more of an OAM channel, a fault indication channel, a resource management channel, a signaling communication channel SCC, and a management communication channel MCC. A control and management message carried by the OAM channel may be, for example, an OAM message. The OAM message is a general name of a series of messages for implementing operation, maintenance, and management on an end-to-end IPv6 path, for example, an SRv6 path. A control and management message carried by the fault indication channel may be, for example, a fault indication message, and the fault indication message records fault indication information of the first path. A control and management message carried by the resource management channel may be, for example, a resource management message, and is used for implementing resource management on a path, for example, the first path. The SCC is used for providing an independent channel for transmitting control information between two nodes on an IPv6 path. The MCC is used for providing an independent channel for transmitting management information between two nodes on an IPv6 path. In an implementation, for example, the control and management message carried by the resource management channel may include: one or more of a resource reservation request message, a resource status update message, and a resource reservation cancellation message. The resource reservation request message indicates a node on the first path to reserve resources; the resource status update message is used for collecting available resources of a node on the first path; and the resource reservation cancellation message is used for canceling a resource reservation request, where the first path mentioned herein is the transmission path of the first IPv6 packet. It may be understood that, when the control channel carried by the associated channel includes the resource management channel, the first IPv6 packet includes the resource reservation request message, the resource status update message, or the resource reservation cancellation message.

In an implementation, the first IPv6 packet may be a service packet. In other words, a data payload of the first IPv6 packet carries user data. When the first IPv6 packet is a service packet, when the service packet is transmitted, control and management may be performed on the IPv6 network based on a status when the IPv6 network transmits an actual service packet. In this way, control and management can be implemented along with traffic. For example, an OAM message is carried in the associated channel to implement in-situ flow information telemetry.

In an implementation, the first IPv6 packet may be a measurement packet. When the first IPv6 packet is a measurement packet, control and management may be performed on the IPv6 network according to a requirement. In an example, the associated channel may be carried in a payload of the IPv6 packet. For example, control and management may be performed on the IPv6 network before the service packet is transmitted, and the service packet is transmitted after the transmission quality of the IPv6 network is optimized, improving the quality of service of the IPv6 network.

According to a third aspect, an embodiment of this application provides a packet processing method. For example, the method may be performed by a first communication apparatus. The first communication apparatus may correspond to a head node or an intermediate node on a transmission path of a first IPv6 packet. In an example, the first communication apparatus may obtain a first IPv6 packet, where the first IPv6 packet includes a fault indication channel, and the fault indication channel records fault indication information of a first path. The first path may be, for example, a transmission path of the first IPv6 packet. After obtaining the first IPv6 packet, the first communication apparatus may forward the first IPv6 packet. It can be learned that, by using this solution, the fault indication information existing in the first path may be quickly transmitted to another node such as a tail node on the first path through a data plane, so that when a node such as the tail node on the first path determines that the first path is faulty, corresponding measures can be quickly and efficiently taken, preventing the quality of service from being affected due to the faulty first path.

In an implementation, the first communication apparatus may receive a second IPv6 packet from an upstream node, and the second IPv6 packet includes a fault indication channel. After receiving the second IPv6 packet, the first communication apparatus may record first fault indication information into the fault indication channel of the second IPv6 packet, to obtain the first IPv6 packet. The first fault indication information mentioned herein may be fault indication information determined by the first communication apparatus, and the first fault indication information may be, for example, a bit error rate and/or a packet loss rate of the first communication apparatus. In this manner, the first communication apparatus may transmit, through the data plane, the first fault indication information determined by the first communication apparatus to a downstream node of the first communication apparatus on the first path.

According to a fourth aspect, an embodiment of this application provides a packet processing method. For example, the method may be performed by a first communication apparatus. The first communication apparatus may correspond to a tail node on a transmission path of a first IPv6 packet. In an example, the first communication apparatus may receive a first Internet Protocol version 6 IPv6 packet, where the first IPv6 packet includes a fault indication message, and the fault indication message is used for record fault indication information of a first path. The first path mentioned herein is a transmission path of the first IPv6 packet. After receiving the first IPv6 packet, the first communication apparatus may obtain the fault indication information of the first path. It can be learned that, by using this solution, the fault indication information existing in the first path may be quickly transmitted to another node such as a tail node on the first path through a data plane, so that a node such as the tail node on the first path obtains the fault indication information of the first path. Further, corresponding measures may be quickly and efficiently taken, for example, the fault indication information of the first path is sent back to a head node, for the head node to perform path switching; or a head node is notified to perform path switching. Therefore, the quality of service is prevented from being affected due to the faulty first path.

For the third aspect and the fourth aspect:
In an implementation, an extension header of the first IPv6 packet further includes an associated channel, the associated channel carries a plurality of types of control channels, each type of control channel carries at least one type of control and management message, and the at least one type of control and management message includes the fault indication message. In this case, because the extension header of the first IPv6 packet includes an associated channel, if a plurality of control and management functions need to be implemented for an IPv6 network, a plurality of types of control and management messages may be carried by using the associated channel, without using a plurality of protocols to carry the plurality of types of control and management messages, improving efficiency of control and management on the IPv6 network. In an implementation, the extension header includes indication information, and the indication information indicates the associated channel.

In an implementation, the associated channel may be carried in an IPv6 extension header, implementing in-situ flow information telemetry.

In an implementation, the associated channel may alternatively be carried in a payload of an IPv6 packet.

In an implementation, the extension header is a hop-by-hop HBH option header or a destination option header DOH.

In an implementation, the first IPv6 packet is a segment routing Internet Protocol version 6 SRv6 packet.

In an implementation, the extension header is a segment routing header SRH.

In an implementation, the indication information is carried in a TLV field.

In an implementation, a type field of the TLV field carries the indication information.

In an implementation, the TLV field includes a channel type field, and the channel type field indicates a type of a control channel carried by the associated channel.

In an implementation, the at least one type of control channel further includes any one or more of the following: an OAM channel, a resource management channel, a signaling communication channel SCC, and a management communication channel MCC.

In an implementation, the resource management channel carries one or more of a resource reservation request message, a resource status update message, and a resource reservation cancellation message.

In an implementation, the first IPv6 packet includes identification information, the identification information is used for identifying a first path, and the first path is a transmission path of the first IPv6 packet.

In an implementation, the identification information is used by a node on the first path to identify an association relationship between the associated channel and the first path.

In an implementation, the first IPv6 packet is a segment routing Internet Protocol version 6 SRv6 packet, and a segment list segment list or a path segment path segment of the SRv6 packet carries the identification information.

In an implementation, the associated channel includes the identification information used for identifying the first path.

According to a fifth aspect, this application provides a communication apparatus, including: a transceiver unit and a processing unit. The transceiver unit is configured to perform a receiving and sending operation according to the first aspect or any one of the first aspect, and the processing unit is configured to perform an operation other than the receiving and sending operation according to the first aspect or any one of the first aspect. Alternatively, the transceiver unit is configured to perform a receiving and sending operation according to the second aspect or any one of the second aspect, and the processing unit is configured to perform an operation other than the receiving and sending operation according to the second aspect or any one of the second aspect. Alternatively, the transceiver unit is configured to perform a receiving and sending operation according to the third aspect or any one of the third aspect, and the processing unit is configured to perform an operation other than the receiving and sending operation according to the third aspect or any one of the third aspect. Alternatively, the transceiver unit is configured to perform a receiving and sending operation according to the fourth aspect or any one of the fourth aspect, and the processing unit is configured to perform an operation other than the receiving and sending operation according to the fourth aspect or any one of the fourth aspect.

According to a sixth aspect, this application provides a communication apparatus. The communication apparatus includes a memory and a processor, where the memory is configured to store program code; and the processor is configured to run instructions in the program code, and the communication apparatus is enabled to perform the method according to the first aspect or any one of the first aspect, or the communication apparatus is enabled to perform the method according to the second aspect or any one of the second aspect; or the communication apparatus is enabled to perform the method according to the third aspect or any one of the third aspect, or the communication apparatus is enabled to perform the method according to the fourth aspect or any one of the fourth aspect.

According to a seventh aspect, this application provides a communication apparatus. The communication apparatus includes a communication interface and a processor. The communication interface is configured to perform a receiving and sending operation according to the first aspect or any one of the first aspect, and the processor is configured to perform an operation other than the receiving and sending operation according to the first aspect or any one of the first aspect. Alternatively, the communication interface is configured to perform a receiving and sending operation according to the second aspect or any one of the second aspect, and the processor is configured to perform an operation other than the receiving and sending operation according to the second aspect or any one of the second aspect. Alternatively, the communication interface is configured to perform a receiving and sending operation according to the third aspect or any one of the third aspect, and the processor is configured to perform an operation other than the receiving and sending operation according to the third aspect or any one of the third aspect. Alternatively, the communication interface is configured to perform a receiving and sending operation according to the fourth aspect or any one of the fourth aspect, and the processor is configured to perform an operation other than the receiving and sending operation according to the fourth aspect or any one of the fourth aspect.

According to an eighth aspect, this application provides a computer-readable storage medium, where the computer-readable storage medium stores instructions, and when the instructions are run on a computer, the computer is enabled to perform the method according to the first aspect or any one of the first aspect, or the computer is enabled to perform the method according to the second aspect or any one of the second aspect; or the computer is enabled to perform the method according to the third aspect or any one of the third aspect, or the computer is enabled to perform the method according to the fourth aspect or any one of the fourth aspect.

According to a ninth aspect, this application provides a communication system. The communication system includes: the communication apparatus according to the fifth aspect or the sixth aspect or the seventh aspect and performing the method according to the first aspect or any one of the first aspect, or the communication apparatus according to the fifth aspect or the sixth aspect or the seventh aspect and performing the method according to the second aspect or any one of the second aspect.

According to a tenth aspect, this application provides a communication system. The communication system includes: the communication apparatus according to the fifth aspect or the sixth aspect or the seventh aspect and performing the method according to the third aspect or any one of the third aspect, or the communication apparatus according to the fifth aspect or the sixth aspect or the seventh aspect and performing the method according to the fourth aspect or any one of the fourth aspect.

### BRIEF DESCRIPTION OF DRAWINGS

To describe the technical solutions in embodiments of this application or in the conventional technology more clearly, the following briefly introduces the accompanying drawings used in describing the embodiments or the conventional technology. It is clear that the accompanying drawings in the following description show merely some embodiments of this application, and a person of ordinary skill in the art may still derive other accompanying drawings from these accompanying drawings without creative efforts.
FIG. 1a is a schematic diagram of a structure of an IPv6 network according to an embodiment of this application;
FIG. 1b is a schematic flowchart of a packet processing method according to an embodiment of this application;
FIG. 2a-1 is a schematic diagram of a structure of a TLV field according to an embodiment of this application;

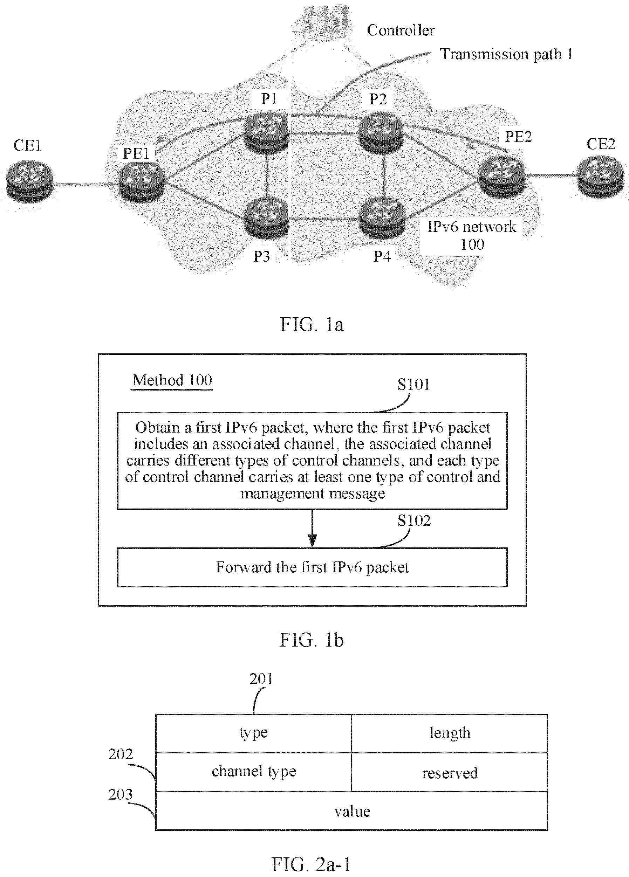

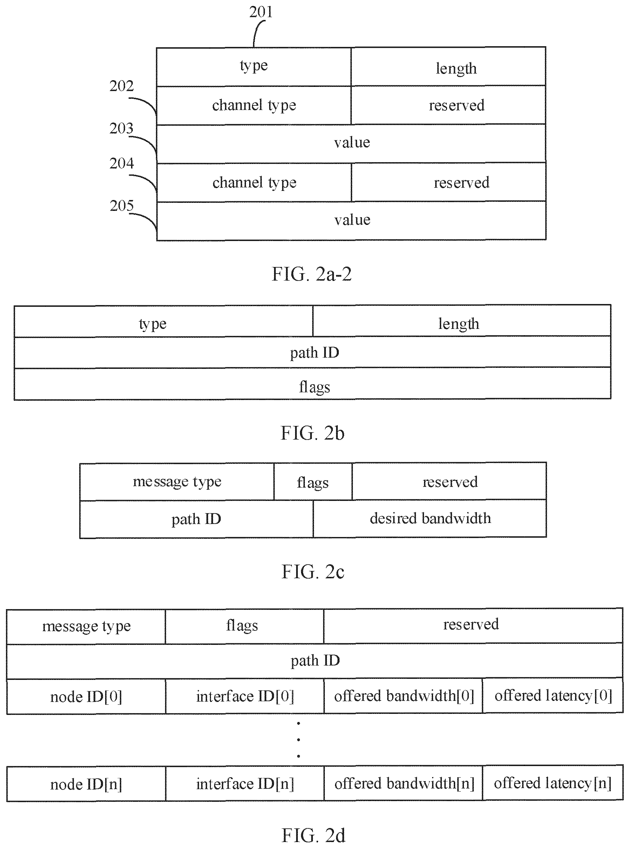

FIG. 2a-2 is a schematic diagram of a structure of a TLV field according to an embodiment of this application;
FIG. 2b is a schematic diagram of a structure of a fault indication message according to an embodiment of this application;
FIG. 2c is a schematic diagram of a structure of a message resource reservation request message according to an embodiment of this application;
FIG. 2d is a schematic diagram of a structure of a resource status update message according to an embodiment of this application;

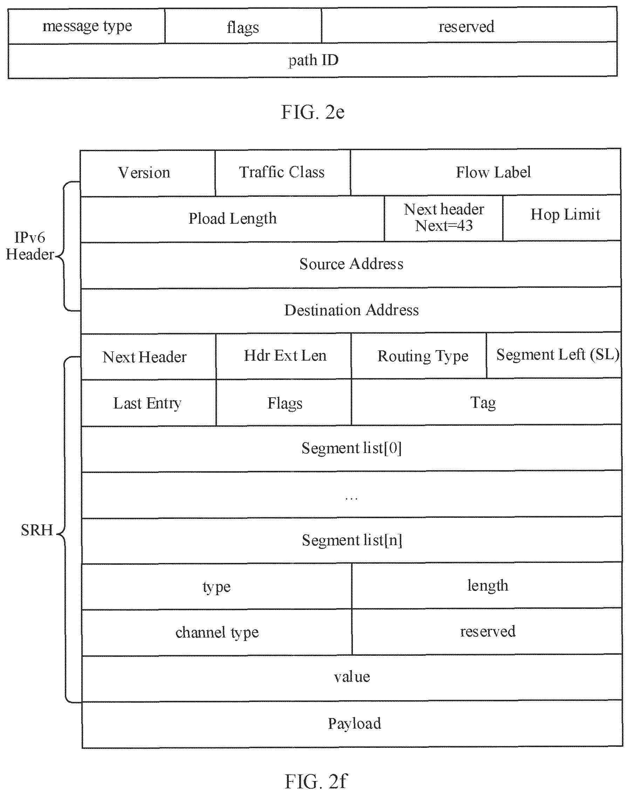

FIG. 2e is a schematic diagram of a structure of a resource cancellation message according to an embodiment of this application;
FIG. 2f is a schematic diagram of a structure of a first IPv6 packet according to an embodiment of this application;

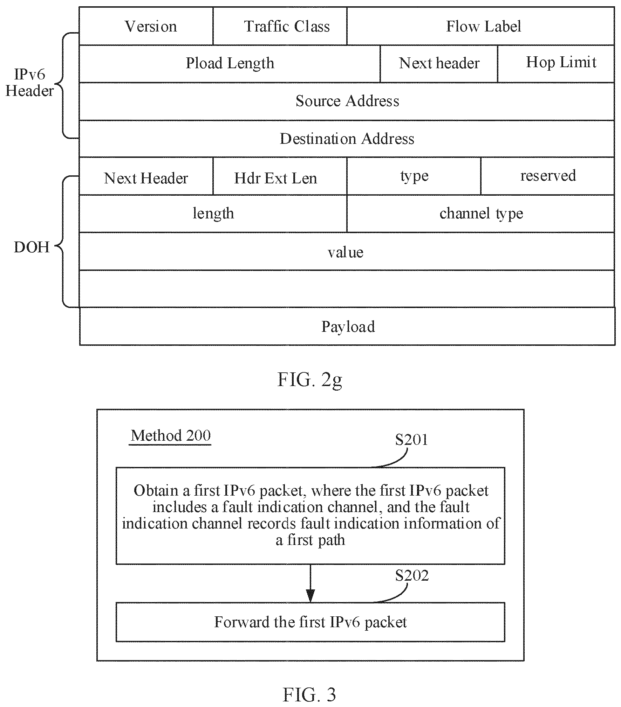

FIG. 2g is a schematic diagram of a structure of a first IPv6 packet according to an embodiment of this application;
FIG. 3 is a schematic flowchart of a packet processing method according to an embodiment of this application;

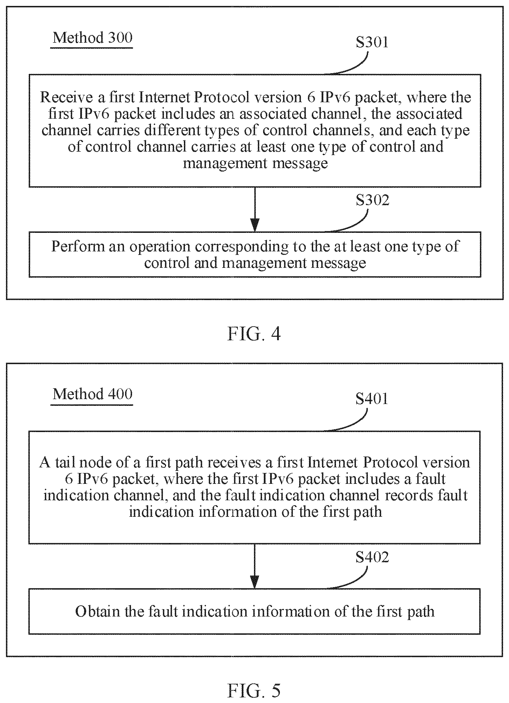

FIG. 4 is a schematic flowchart of a packet processing method according to an embodiment of this application;
FIG. 5 is a schematic flowchart of a packet processing method according to an embodiment of this application;

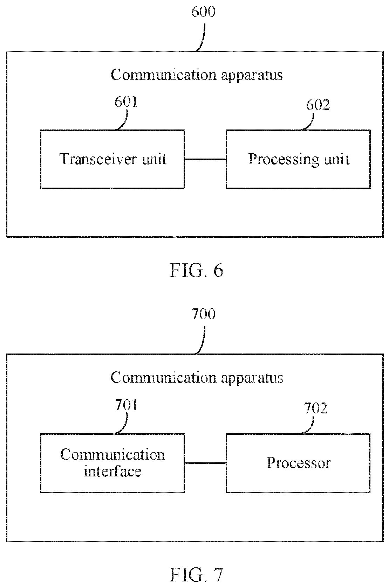

FIG. 6 is a schematic diagram of a structure of a communication apparatus according to an embodiment of this application;
FIG. 7 is a schematic diagram of a structure of a communication apparatus according to an embodiment of this application; and

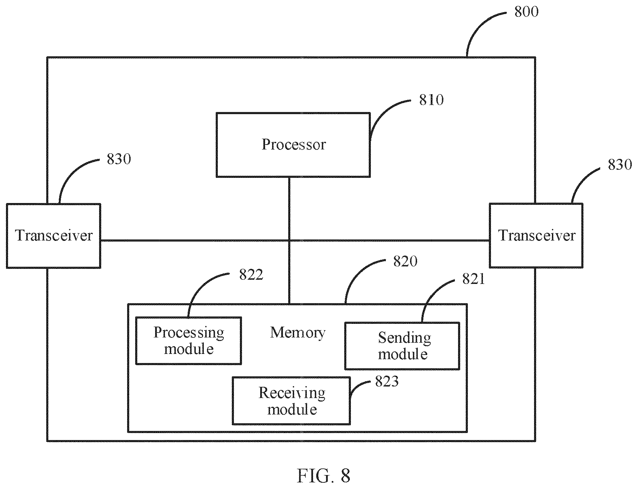

FIG. 8 is a schematic diagram of a structure of a communication apparatus according to an embodiment of this application.

### DESCRIPTION OF EMBODIMENTS

An embodiment of this application provides a packet processing method, to implement control and management on an IPv6 network.

Refer to FIG. 1a, which is a schematic diagram of a structure of an IPv6 network according to an embodiment of this application.

In a network scenario shown in FIG. 1a, a customer edge (customer edge, CE) CE1 may communicate with a CE2 by using an IPv6 network 100. Node provider edge (provider edge, PE) devices PE1, PE2, and provider backbone (provider, P) devices P1, P2, P3, and P4 are all nodes in the IPv6 network 100. Transmission path 1: PE1-P1-P2-PE2 is a transmission path in the IPv6 network 100. In an example, the IPv6 network 100 may be a network to which a segment routing (segment routing, SR) technology is applied, that is, the IPv6 network 100 may be a segment routing Internet Protocol version 6 (segment routing Internet Protocol version 6, SRv6) network. In this case, the foregoing nodes PE1, PE2, P1, P2, P3, and P4 may all be nodes supporting SRv6 forwarding. In an example, the network may further include a control and management device, for example, a controller configured to control and/or manage a network device. For example, the controller may perform path calculation based on a network topology.

In an example, the IPv6 network 100 is an SRv6 network, and the controller calculates a transmission path in the SRv6 network, and delivers, to a node in the SRv6 network, a segment list indicating an SRv6 forwarding path. For example, the controller may deliver a segment list indicating the transmission path 1 to the PE1, and the PE1 may generate an SRv6 packet based on the segment list indicating the transmission path 1. In another example, the controller may deliver a segment list indicating a transmission path PE2-P2-P1-PE1 to the PE2, and the PE2 may generate an SRv6 packet based on the segment list indicating the transmission path PE2-P2-P1-PE1.

It should be noted that, FIG. 1a is merely shown for ease of understanding, and constitutes no limitation on embodiments of this application. A network architecture of the IPv6 network is not limited to a form shown in FIG. 1a.

Currently, the control and management on the IPv6 network covers a plurality of aspects, for example, determining latency and packet loss of a transmission path (for example, the transmission path 1 shown in FIG. 1a); for another example, testing connectivity of a transmission path; and for another example, performing resource management on a transmission path. A protocol needs to be independently designed for each control and management function to carry a control and management message. As a result, the efficiency of performing control and management on the IPv6 network is low. In addition, for a node, running a plurality of protocols occupies bandwidth, which reduces the service data transmission efficiency consequently. Currently, for using a protocol to carry a control and management message to implement a corresponding control and management function, examples are provided for description:
Example 1: A ping function of an IPv6 protocol may be used for implementing connectivity and availability detection on a segment routing Internet Protocol version 6 (segment routing Internet Protocol version 6, SRv6) segment identifier (segment identifier, SID). The SID mentioned herein may be, for example, an SID corresponding to the node PE2 shown in FIG. 1a. A trace route function of the IPv6 protocol may be used for implementing hop-by-hop fault locating from a packet detection point to a destination address and tracing a path of the SRv6 SID. A path between the packet detection point and the destination address mentioned herein may be, for example, the transmission path 1 shown in FIG. 1a.
Example 2: A user datagram protocol (user datagram protocol, UDP) packet may be used for separately carrying a two-way active measurement protocol (two-way active measurement protocol, TWAMP) packet and a simple two-way active measurement protocol (simple two-way active measurement protocol, STAMP) packet as a measurement packet, and the measurement packet is sent between the PE1 and the PE2, to measure two-way latency, a one-way packet loss rate, and one-way jitter between the PE1 and the PE2.
Example 3: A bidirectional forwarding detection (bidirectional forwarding detection, BFD) protocol may be used for implementing a fault detection function. For specific details, refer to a related description part of request for comments (request for comments, RFC) 5880, and details are not described herein.
Example 4: A resource reservation protocol (resource reservation protocol, RSVP) may be used for implementing a resource reservation function. For specific details, refer to a related description part of RFC 3209, and details are not described herein.

However, in the manners of implementing corresponding control and management functions shown in the foregoing 4 examples, each manner supports only some control and management functions. In addition, each manner needs to use IP upper layer protocol encapsulation, a node needs to support an upper layer protocol function, and a control plane of the upper layer protocol is required for processing. The IP upper layer protocol encapsulation mentioned herein refers to layer 4 (layer 4, L4) protocol encapsulation, L5 protocol encapsulation, L6 protocol encapsulation, or L7 protocol encapsulation. To implement the plurality of control and management functions described in the foregoing 4 examples at the same time, session identification information with similar functions is separately carried between different protocols (for example, both STAMP and BFD carry UDP port numbers.), leading to redundant and repeated carried information.

Example 5: For an SRv6 packet, for example, an SRv6 packet transmitted by the PE1 to the PE2 by using the transmission path 1, an O-bit dyeing marker may be defined in a segment routing header (segment routing header, SRH) of the SRv6 packet, which is used as basis for whether to collect and output telemetry (telemetry) data. For an SRv6 node such as the P1, the P2, or the PE2, when a received packet carries the O-bit dyeing marker, the node may copy the received original SRv6 packet and add a timestamp to the copied SRv6 packet, and send the packet to a controller to implement data collection. The controller may process collected data information, to obtain a traffic sampling result of the transmission path 1 or a segment of SRv6 path in the transmission path 1, for example, obtain transmission latency of the transmission path 1 or a segment of SRv6 path in the transmission path 1. Certainly, in addition to adding a timestamp to the copied SRv6 packet, the node that receives the O-bit dyeing marker may further add other data to the copied SRv6 packet, which is not described one by one herein.

However, the manner of implementing a corresponding control and management function shown in Example 5 is to define an O-bit dyeing marker in an SRH. Therefore, the manner is applicable only to an SRv6 forwarding scenario, and is not applicable to a pure IPv6 forwarding node that does not use an SRH for forwarding.

With emergence of application scenarios such as the industrial Internet, an IP layer technology will be introduced into an industrial field using original "physical layer + link layer + application layer" as a mainstream protocol stack, and is used as an interconnection technology for implementing long-distance and large-scale transmission between industrial operation technology (operation technology, OT) systems. In addition, the industrial OT system is generally a closed system, and a very simplified protocol stack is required to implement efficient transmission within an autonomous system. Therefore, it is impossible to introduce too many protocols to implement different control and management functions such as operation, administration and maintenance (operation, administration and maintenance, OAM), a management communication channel (management communication channel, MCC), resource reservation of an IP layer.

In view of this, an embodiment of this application provides a packet processing method. The packet processing method provided in this embodiment of this application may be applied to an IPv6 network. A network structure of the IPv6 network is not specifically limited in this embodiment of this application. For example, an architecture of the IPv6 network may be shown in FIG. 1a. In some examples, some or all nodes in the IPv6 network may support SRv6. A first path mentioned in the following embodiment may be, for example, the transmission path 1 shown in FIG. 1a.

Before the packet processing method provided in this embodiment of this application is described, terms related to embodiments of this application are first described.

Associated channel: The associated channel can provide a control channel. In this application, different types of control channels can be provided by using one associated channel. In other words, different types of control channels are carried by using a general associated channel provided in this application. As required, one associated channel may carry one or more control channels. Each type of control channel can carry at least one type of control and management message.

Control channel: The control channel carries a control and management message, and one control channel may carry at least one type of control and management message.

Control and management message: The control and management message is a message that can control and/or manage a path, for example, a tunnel. A format of the control and management message and specific content included in the control and management message are not specifically limited in embodiments of this application, provided that the control and management message can implement a corresponding control and/or management function. In an example, one type of control and management message may be used for implementing one type of control function or one type of management function.

The following describes the packet processing method with reference to the accompanying drawings.

It should be noted that, a type length value (type length value, TLV) field mentioned in this embodiment of this application may include three fields: a type, a length, and a value. When the length of the TLV field is fixed, the TLV field in this application may alternatively be a type-value TV field that does not include a length field.

Refer to FIG. 1b, FIG. 1b is a schematic flowchart of a packet processing method according to an embodiment of this application. The packet processing method 100 shown in FIG. 1b may be executed by a first communication apparatus, and the first communication apparatus may correspond to a node in an IPv6 network. For example, the first communication apparatus may correspond to the node PE1 shown in FIG. 1a, or may correspond to the node P1 shown in FIG. 1a.

A communication apparatus mentioned in this embodiment of this application may be a network device such as a switch or a router, or may be a part of a component on a network device, for example, a board or a line card on a network device, or may be a functional module on a network device, or may be a chip configured to implement the method in this application. This is not specifically limited in this embodiment of this application. Communication apparatuses may be directly connected, for example, but not limited to, using an Ethernet cable or an optical cable.

In this embodiment of this application, that a communication apparatus corresponds to a node refers to: the communication apparatus may be the node itself, or may be a part of a component on the node. The node in this embodiment of this application may be a network device such as a switch or a router.

FIG. 2a-1 to FIG. 2g in embodiments of this application are merely shown as possible examples for ease of understanding related content mentioned in embodiments of this application, and constitute no limitation on embodiments of this application.

The method 100 may include, for example, the following S101 and S102.

S101: Obtain a first IPv6 packet, where the first IPv6 packet includes an associated channel, the associated channel carries different types of control channels, and each type of control channel carries at least one type of control and management message.

In this embodiment of this application, if the first communication apparatus corresponds to a head node on a transmission path of the first IPv6 packet, the first communication apparatus may generate the first IPv6 packet. If the first communication apparatus corresponds to an intermediate node on a transmission path of the first IPv6 packet, the first communication apparatus may receive a second IPv6 packet from an upstream node, where the second IPv6 packet includes an associated channel, and the first communication apparatus may process the second IPv6 packet based on the associated channel in the second IPv6 packet, to obtain the first IPv6 packet. It should be noted that, specific content in the associated channel included in the second IPv6 packet may be different from specific content included in the associated channel in the first IPv6 packet, and certainly may also be the same. Being the same or different depends on whether a node needs to process an associated channel in a received packet. This is not specifically limited in this embodiment of this application. Certainly, if the first communication apparatus corresponds to the intermediate node on the transmission path of the first IPv6 packet, the first communication apparatus may alternatively receive the first IPv6 packet from the upstream node. For a specific implementation of processing performed by the first communication apparatus on the second IPv6 packet based on the associated channel, refer to the following related descriptions, and details are not described herein.

In this embodiment of this application, to improve efficiency of control and management on the IPv6 network, the IPv6 packet may be extended, and a general field is extended in the IPv6 packet to reflect the associated channel. The general field may carry at least one control channel, where one type of control channel corresponds to at least one type of control and management message. A payload of the IPv6 packet may be extended, and a general field may be extended in the payload to reflect the associated channel, or an extension header of the IPv6 packet may be extended, and a general field may be extended to reflect the associated channel. In other words, the associated channel may be carried in a payload of the first IPv6 packet, or may be carried in an extension header of the first IPv6 packet.

In an example, when the extension header of the IPv6 packet is extended, a field may be extended to carry indication information, where the indication information indicates that the extension header of the IPv6 packet carries the associated channel. In other words, in an example, for the first IPv6 packet, the extension header of the first IPv6 packet includes the associated channel, and the extension header of the first IPv6 packet further includes indication information, where the indication information indicates that the extension header of the first IPv6 packet includes the associated channel.

In an implementation of this embodiment of this application, the indication information may be carried in a type length value (type length value, TLV) field of the extension header. In other words, when the extension header of the IPv6 packet is extended, a TLV field may be extended to carry the indication information. Example for description: The extension header of the first IPv6 packet includes a TLV field 1, and the TLV field 1 carries the indication information. In an example, a type field of the extended TLV field may carry the indication information.

In an implementation of this embodiment of this application, the associated channel may alternatively be carried in the TLV field of the extension header. In other words, when the extension header of the IPv6 packet is extended, a TLV field may be extended to carry the associated channel. Example for description: The extension header of the first IPv6 packet includes a TLV field 2, and the TLV field 2 carries the associated channel.

In an implementation, when the associated channel is carried by using the TLV field 2, if the associated channel carries a plurality of types of control channels, the TLV field 2 may include indication information of each type of control channel, where the indication information of each type of control channel indicates a type of a control channel included in the TLV field 2. For example, the indication information of each type of control channel may be carried in a value field of the TLV field 2. The indication information of each control channel may be a value of an indication bit corresponding to each control channel, or may be a specific value indicating each control channel. This is not specifically limited in this embodiment of this application. For example, in the TLV field 2, if values of indication bits corresponding to a control channel 1 and a control channel 2 are both 1, and values of indication bits corresponding to other control channels are 0, it indicates that the TLV field 2 includes the control channel 1 and the control channel 2. The indication bit mentioned herein may include, for example, one bit. In another example, if a value 1 is included in the value field of the TLV field, and the value 1 corresponds to a control channel 1, it indicates that the TLV field includes the control channel 1. The value 1 mentioned herein may be carried in, for example, a channel type (channel type) field shown in FIG. 2a-1 or FIG. 2a-2.

It should be noted that, in an implementation of this embodiment of this application, the indication information and the associated channel may be carried in a same TLV field, that is, the TLV field 1 and the TLV field 2 may be a same TLV field. In this case, the indication information may be carried in a type field of the TLV field, and the associated channel is carried in a value field of the TLV field. By using this solution, when the IPv6 packet is extended, there is no need to extend a plurality of TLV fields, but only one TLV field needs to be extended.

In an implementation, if the indication information and the associated channel may be carried in the same TLV field, the TLV field may further include a channel type field, and the channel type field indicates a type of a control channel carried by the associated channel. In this case, the type field of the TLV field carries the indication information, and the indication information indicates that content carried in the TLV field is the associated channel. The value field of the TLV field includes a channel type field, and the channel type field indicates a type of a control channel carried by the associated channel. When the associated channel carries a plurality of types of control channels, the value field of the TLV field may include a plurality of channel type fields, and the plurality of channel type fields are in a one-to-one correspondence with the plurality of types of control channels.

In this case, for a structure of the TLV field, refer to FIG. 2a-1 and FIG. 2a-2. Both FIG. 2a-1 and FIG. 2a-2 are schematic diagrams of a structure of a TLV field according to an embodiment of this application. FIG. 2a-1 shows a structure of the TLV field when the associated channel carries one type of control channel, and FIG. 2a-2 shows a structure of the TLV field when the associated channel carries a plurality of types of control channels.

In FIG. 2a-1 and FIG. 2a-2:
The type field 201 carries the indication information.

The channel type field 202 and the channel type field 204 carry a channel type.

The reserved (reserved) field is a reserved field, so as to extend the TLV field subsequently, and the reserved field is an optional field.

The value field 203 carries at least one control and management message carried by a control channel indicated by the channel type 202. In an example, the value field 203 may include at least one sub (sub) TLV, and one sub TLV carries one type of control and management message. A length of the value field 203 may be determined based on the carried control and management message, or may be a fixed length, which is not limited herein.

The value field 205 carries at least one control and management message carried by the channel type 204. In an example, the value field 205 may include at least one sub (sub) TLV, and one sub TLV carries one type of control and management message. A length of the value field 205 may be determined based on the carried control and management message, or may be a fixed length, which is not limited herein. In an example, the at least one control and management message carried in the value field 203 or the value field 205 may be understood as a protocol data unit (protocol data unit, PDU) that carries the control and management message.

In still another example, to avoid excessive extension of the extension header of the IPv6 packet, an undefined field in the extension header of the IPv6 packet may also carry the indication information. Considering that for an SRv6 packet, a flags (flags) field in an SRH of the SRv6 packet is not clearly defined, in some embodiments, if the first IPv6 packet is an SRv6 packet, the flags field in the SRH of the first IPv6 packet includes the indication information.

In this embodiment of this application, the at least one type of control channel carried by a management channel may include, for example, one or more of an OAM channel, a fault indication channel, a resource management channel, a signaling communication channel (signaling communication channel, SCC), and an MCC.

A control and management message carried by the OAM channel may be, for example, an OAM message. The OAM message is a general name of a series of messages for implementing operation, maintenance, and management on an end-to-end IPv6 path, for example, an SRv6 path. The OAM channel in this application may support hop-by-hop detection, and may also support end-to-end detection. The OAM message includes but is not limited to: a connectivity check message, a client signal fault indication message, a one-way/two-way packet loss measurement message, a one-way/two-way latency measurement message, and a link loopback message. The connectivity check message is used for implementing connectivity check on an IPv6 path. The client signal fault indication message is used for detecting whether a client signal fault exists in an IPv6 path. The one-way/two-way packet loss measurement message is used for detecting one-way/two-way packet loss on an SRv6 path. The one-way/two-way latency measurement message is used for detecting one-way/two-way latency of an IPv6 path. The link loopback message is used for implementing loopback detection on an IPv6 path. In an example, when the OAM message corresponds to different types of messages, the OAM channel corresponds to different types of OAM channels. For example, if the OAM message is a connectivity check message, the OAM channel corresponds to a connectivity check channel and carries the connectivity check message.

A format of the OAM message is not limited in this embodiment of this application, provided that the message can implement a corresponding OAM detection function. A format of a packet carrying the OAM message is also not specifically limited in this embodiment of this application. In an example, if the OAM message is a connectivity check message, for example, the channel type may indicate that the control channel is a connectivity check channel, and the value field carries the connectivity check message.

A control and management message carried by the fault indication channel may be, for example, a fault indication message. The control and management message carried by the fault indication channel records fault indication information of a first path. In this case, the first communication apparatus may correspond to a node on the first path, and the first path may be the transmission path of the first IPv6 packet. The first path mentioned herein may be an end-to-end path, or may be a segment of path, which is not limited herein. In an example, the fault indication message may include one or more of fault indication information, for example, may include forward fault indication information and/or backward fault indication information. The forward fault indication information indicates that an upstream node of the first communication apparatus on the transmission path of the first IPv6 packet is faulty, for example, indicates that an intermediate node on the transmission path of the first IPv6 packet is faulty. That an upstream node is faulty mentioned herein may be, for example, that a bit error rate of the upstream node is higher than a specific threshold, or that a packet loss rate of the upstream node is higher than a specific threshold, which is not limited herein. The backward fault indication information indicates that a downstream node of the first communication apparatus on the transmission path of the first IPv6 packet is faulty, for example, indicates that a tail node on the transmission path of the first IPv6 packet is faulty. Similarly, that a downstream node is faulty mentioned herein may be, for example, that a bit error rate of the downstream node is higher than a specific threshold, or that a packet loss rate of the downstream node is higher than a specific threshold, which is not limited herein. In still another example, the fault indication information may reflect, for example, a fault state of the first path. For example, the fault indication information includes: one or more of signal fail (signal fail, SF), signal degrade (signal degrade, SD), a bit error rate higher than a specific threshold, a packet loss rate higher than a specific threshold, and latency higher than a specific threshold. In this case, the control and management message carried by the fault indication channel may include, for example, indication bits corresponding to various types of fault indication information. In another implementation, the fault indication information may be, for example, information such as a bit error rate and a packet loss rate of a node on the first path. In this case, the control and management message carried by the fault indication channel may include, for example: a specific value of the bit error rate and/or a specific value of the packet loss rate. Optionally, the fault indication message may further include an identifier of the first path.

In an example, when the channel type field in the associated channel indicates the fault indication channel, the value field of the TLV field that carries the associated channel includes the fault indication message. For example, in FIG. 2a-1, the channel type field 202 indicates a fault indication channel, and the value field 203 carries a fault indication message. In another example, in FIG. 2a-2, the channel type field 204 indicates a fault indication channel, and the value field 205 carries a fault indication message.

In still another example, the fault indication message is carried in a TLV field, and the TLV field mentioned herein may be carried in the value field 203 of the TLV field shown in FIG. 2a-1, or may be carried in the value field 203 or 205 of the TLV field shown in FIG. 2a-2. Refer to FIG. 2b, FIG. 2b is a schematic diagram of a structure of a fault indication message according to an embodiment of this application. For FIG. 2b, it should be noted that:

The type field of a TLV field shown in FIG. 2b indicates that a control and management message carried in the TLV field is a fault indication message;
the path identifier (path ID) field (optional) carries an identifier of the first path, where the identifier of the first path may not be carried in the fault indication message; and
the flags (flags) field carries one or more of fault indication information described above. For example, in an example, the flags field includes 2 indication bits. One indication bit indicates forward fault indication information, and the other indication bit indicates backward fault indication information. When a value of the indication bit indicating the forward fault indication information is 1, it indicates that the fault indication message includes the forward fault indication information, and when a value of the indication bit indicating the backward fault indication information is 1, it indicates that the fault indication message includes the backward fault indication information. In still another example, the flags field includes 5 indication bits, and the 5 indication bits may indicate 5 types of fault indication information: SF, SD, a bit error rate higher than a specific threshold, a packet loss rate higher than a specific threshold, and latency higher than a specific threshold, where one indication bit indicates one type of fault indication information. In another example, the flags field includes a field carrying a bit error rate and a field carrying a packet loss rate.

In addition, in still another example, the fault indication message may include a plurality of types of messages, for example, may include a link status indication message and a link parameter indication message. The link status indication message may include one or more of fault indication information such as SF, SD, a bit error rate higher than a specific threshold, a packet loss rate higher than a specific threshold, and latency higher than a specific threshold. The link parameter indication message may include information such as a bit error rate and a packet loss rate. In this case, the type field shown in FIG. 2b may indicate one of the link status indication message or the link parameter indication message. Correspondingly, when the type field shown in FIG. 2b indicates the link status indication message, the flags field shown in FIG. 2b includes one or more of fault indication information such as SF, SD, a bit error rate higher than a specific threshold, a packet loss rate higher than a specific threshold, and latency higher than a specific threshold. When the type field shown in FIG. 2b indicates the link parameter indication message, the flags field shown in FIG. 2b includes one or more of fault indication information such as a bit error rate and a packet loss rate.

A control and management message carried by the resource management channel is used for implementing resource management on a path, for example, the first path. In this case, the first communication apparatus may correspond to a node on the first path, and the first path may be the transmission path of the first IPv6 packet.

The control and management message carried by the resource management channel may be, for example, a resource management message. The resource management message may include a plurality of types of messages. In an example, the resource management message may include a resource reservation request message, which indicates a node on the first path to reserve resources. For example, the resource reservation request message may carry SLA information such as bandwidth and latency. In still another example, the resource management message may include a resource status update message, which is used for collecting available resources of a node on the first path, for example, collect resource information such as bandwidth, buffer, and latency that can be provided by a node on the first path. In another example, the resource management message may include a resource reservation cancellation message, which is used for canceling a resource reservation request.

For understanding of the resource reservation request message, refer to FIG. 2c. FIG. 2c is a schematic diagram of a structure of a resource reservation request message according to an embodiment of this application. The resource reservation request message is carried in a TLV field. The TLV field mentioned herein may be carried in the value field of the TLV field shown in FIG. 2a-1 or FIG. 2a-2. For FIG. 2c, it should be noted that:

The message type (message type) field indicates that a resource management message carried in the TLV field is a resource reservation request message;
the path ID field indicates an identifier of the first path; and
the desired bandwidth (desired bandwidth) indicates bandwidth requested to be reserved.

For the resource reservation request message, it should be noted that, FIG. 2c is merely an example, and constitutes no limitation on this embodiment of this application.

For understanding of the resource status update message, refer to FIG. 2d. FIG. 2d is a schematic diagram of a structure of a resource status update message according to an embodiment of this application. The resource status update message is carried in a TLV field. The TLV field mentioned herein may be carried in the value field of the TLV field shown in FIG. 2a-1 or FIG. 2a-2. For FIG. 2d, it should be noted that:

The message type field indicates that a resource management message carried in the TLV field is a resource status update message;
the path ID field indicates an identifier of the first path;
the node ID[i] (node ID) carries an identifier of a node i on the first path, where a value of i is less than or equal to n and greater than or equal to 0, and the first path includes at least (n+1) nodes;
the interface ID[i] indicates an interface identifier of the node i;
the offered bandwidth (offered bandwidth) [i] indicates bandwidth that can be provided by the node i; and
the offered latency (offered latency) [i] indicates latency that can be provided by the node i.

For the resource status update message, it should be noted that, FIG. 2d is merely an example, and constitutes no limitation on this embodiment of this application.

For understanding of the resource cancellation message, refer to FIG. 2e. FIG. 2e is a schematic diagram of a structure of a resource cancellation message according to an embodiment of this application. The resource cancellation message is carried in a TLV field. The TLV field mentioned herein may be carried in the value field of the TLV field shown in FIG. 2a-1 or FIG. 2a-2. For FIG. 2e, it should be noted that:
The information type (message type) field indicates that a resource management message carried in the TLV field is a resource cancellation message; and
the path ID field indicates an identifier of a path for canceling resource reservation.

Certainly, the resource cancellation message may further include other optional fields, for example, information such as desired quality of service, a resource reservation style, and requested bandwidth. This is not specifically limited in this embodiment of this application.

For the resource cancellation message, it should be noted that, FIG. 2e is merely an example, and constitutes no limitation on this embodiment of this application.

It should be noted that, the resource management message in this embodiment of this application may alternatively be an RSVP message, for example, an RSVP message mentioned in RFC 3209, or may be a message obtained after corresponding extension is performed on the RSVP message mentioned. This is not specifically limited in this embodiment of this application.

The SCC is configured to provide an independent channel between two nodes on an IPv6 path to transmit an SCC message, where the SCC message is used for transmitting control information.

The MCC is configured to provide an independent channel between two nodes on an IPv6 path to transmit an MCC message, where the MCC message is used for transmitting management information.

For the MCC and the SCC, it should be noted that, in a conventional IPv6 network, there is no independent channel between any two nodes to transmit management information or control information. Therefore, an independent control and management mechanism is required to transmit a management message and a control message. The MCC implements an effect of transmitting a management message without using an independent control and management mechanism, and the SCC implements an effect of transmitting a control message without using an independent control and management mechanism.

Specific formats of the SCC message and the MCC message are not specifically limited in this embodiment of this application. In an example, for formats of the SCC message and the MCC message, refer to a related description part in RFC 5718, and details are not described herein.

As described above, the associated channel may carry at least one control and management message, and the control and management message is a message for controlling and/or managing a path. In this embodiment of this application, to enable a node that receives the first IPv6 packet to determine a path associated with the associated channel, the first IPv6 packet may further include identification information, where the identification information is used for identifying a first path, and the first path is the transmission path of the first IPv6 packet. In this way, the node that receives the first IPv6 packet may identify an association relationship between the associated channel in the first IPv6 packet and the first path, so as to determine the at least one control and management message in the associated channel, for controlling and/or managing the first path. Further, the node that receives the first IPv6 packet may perform a corresponding operation based on the identification information and the at least one control and management message in the associated channel.

For the identification information for identifying the first path, it should be noted that:
In an example, if the first IPv6 packet is an SRv6 packet, because a segment list (segment list) included in an SRH of the SRv6 packet may indicate a transmission path of the SRv6 packet. Therefore, the identification information may be carried by using the segment list of the SRv6 packet, that is, the identification information may be the segment list of the SRv6 packet. The segment list may include several SIDs. An SID indicates an intermediate node that the transmission path passes through, or an SID indicates an SRv6 adjacent link included in the transmission path. An adjacent link between two nodes refers to a link used for direct communication between the two nodes. When one node sends a packet to the other node by using the adjacent link, the other node is a next hop of the previous node. In addition, for the SRv6 packet, the SRH of the SRv6 packet may further include a path segment field, where the path segment field includes 128 bits, and a value of the path segment field is used for identifying an SRv6 path. When the first IPv6 packet used as an SRv6 packet includes a path segment field, a value of the path segment field is used for identifying a transmission path of the first IPv6 packet. Therefore, the identification information may alternatively be carried in the path segment field of the SRv6 packet. In an example, the extension header of the first IPv6 packet mentioned in this embodiment of this application may be a hop-by-hop (hop-by-hop, HBH) option header. In other words, the HBH option header of the first IPv6 packet may include the associated channel. In still another example, the extension header of the first IPv6 packet mentioned in this embodiment of this application may be a destination option header (destination option header, DOH). In other words, the DOH of the first IPv6 packet may include the associated channel. In another example, if the first IPv6 packet is an SRv6 packet, the extension header of the first IPv6 packet mentioned in this embodiment of this application may be an SRH. In other words, the SRH of the first IPv6 packet may include the associated channel. Certainly, if the first IPv6 packet is an SRv6 packet, the extension header of the first IPv6 packet may also be a DOH. In other words, when the first IPv6 packet is an SRv6 packet, the DOH of the first IPv6 packet may include the associated channel.

When the SRH of the first IPv6 packet carries the associated channel, for a structure of the first IPv6 packet, refer to FIG. 2f. FIG. 2f is a schematic diagram of a structure of a first IPv6 packet according to an embodiment of this application.

For the TLV that carries the associated channel shown in FIG. 2f, refer to the description part of FIG. 2a-1 or FIG. 2a-2, which is not described herein again. For other fields shown in FIG. 2f, refer to related description parts in RFC 8200 and RFC 8754, and details are not described herein.

When the DOH of the first IPv6 packet carries the associated channel, for a structure of the first IPv6 packet, refer to FIG. 2g. FIG. 2g is a schematic diagram of a structure of a first IPv6 packet according to an embodiment of this application.

For the TLV that carries the associated channel shown in FIG. 2g, refer to the description part of FIG. 2a-1 or FIG. 2a-2, which is not described herein again. For other fields shown in FIG. 2g, refer to a related description part in RFC 8200, and details are not described herein.

It should be noted that, FIG. 2f and FIG. 2g are merely shown for ease of understanding, and constitute no limitation on this embodiment of this application. For example, in an example, the first IPv6 packet shown in FIG. 2f may further include a DOH, and the first IPv6 packet shown in FIG. 2g may further include an SRH. When FIG. 2g includes an SRH, a DOH may be located between the SRH and an IPv6 base header, and a hop-by-hop control channel may be implemented. The DOH may alternatively be a DOH between the SRH and a payload. In this case, an end-to-end control channel may be supported.

It should be noted that, the first IPv6 packet in this embodiment of this application may be a service packet or a measurement packet. This is not specifically limited in this embodiment of this application. It may be understood that, when the first IPv6 packet is a service packet, when the service packet is transmitted, control and management may be performed on the IPv6 network based on a status when the IPv6 network transmits an actual service packet. That is, in this application, a control channel along with traffic can be implemented based on a data plane. When the first IPv6 packet is a measurement packet, control and management may be performed on the IPv6 network according to a requirement. For example, control and management may be performed on the IPv6 network before the service packet is transmitted, and the service packet is transmitted after the transmission quality of the IPv6 network is optimized, improving the quality of service of the IPv6 network.

S102: Forward the first IPv6 packet.

After obtaining the first IPv6 packet, the first communication apparatus may forward the first IPv6 packet. The node that receives the first IPv6 packet may perform a corresponding operation based on the at least one type of control and management message carried in the associated channel, so as to implement a control and management function corresponding to the at least one type of control and management message.

In some embodiments, after receiving the first IPv6 packet, an intermediate node on the transmission path of the first IPv6 packet may perform an operation corresponding to the at least one type of control and management message. For the operation performed by the intermediate node based on the first IPv6 packet, refer to the following part about an operation performed by the first communication apparatus based on the second IPv6 packet, and details are not described herein.

In some embodiments, after receiving the first IPv6 packet, a tail node on the transmission path of the first IPv6 packet may perform an operation corresponding to the at least one type of control and management message.

In an example, if the associated channel of the first IPv6 packet includes an OAM channel, that is, the first IPv6 packet includes an OAM message: For example, the tail node may upload a timestamp to the controller. In another example, the tail node may calculate transmission latency of the first IPv6 packet based on a timestamp included in the received OAM message and a local timestamp.

In still another example, if the associated channel of the first IPv6 packet includes a fault indication channel, that is, the first IPv6 packet includes a fault indication message, the tail node may obtain fault indication information carried in the fault indication message. Further, in an example, the tail node may perform a corresponding operation based on the fault indication information. Example for description: If the fault indication message included in the associated channel of the first IPv6 packet includes forward fault indication information, the tail node may, for example, reply an IPv6 packet that carries backward fault indication information to the head node. If the fault indication message included in the associated channel of the first IPv6 packet includes backward fault indication information, the tail node may, for example, verify whether the tail node is faulty, for example, verify whether a packet loss rate and/or a bit error rate of the tail node exceeds a specific threshold. If the fault indication message included in the associated channel of the first IPv6 packet includes one or more of SF, SD, a bit error rate higher than a specific threshold, a packet loss rate higher than a specific threshold, and latency higher than a specific threshold, the tail node may, for example, notify the head node to perform path switching. If the fault indication message included in the associated channel of the first IPv6 packet includes a bit error rate and a packet loss rate of each node, the tail node may, for example, upload the fault indication information such as the bit error rate and the packet loss rate to the controller or return the fault indication information to the head node of the first IPv6 packet.

In another example, if the associated channel of the first IPv6 packet includes a resource management channel:
If the associated channel of the first IPv6 packet includes a reservation request message, the tail node may, for example, reserve a corresponding resource for the first path based on the resource reservation request message. If the associated channel of the first IPv6 packet includes a resource status update message, available resource information of the tail node is added to the first IPv6 packet, and the available resource information is returned to the head node of the first path. For understanding, refer to FIG. 2d. Assuming that the tail node corresponds to the node ID[n] shown in FIG. 2d, the tail node may record bandwidth that can be provided by the tail node into the offered bandwidth[n] field shown in FIG. 2d, and record latency that can be provided by the tail node into the offered latency[n] field shown in FIG. 2d. If the associated channel of the first IPv6 packet includes a resource reservation cancellation message, the first communication apparatus may, for example, release a resource reserved for the first path indicated by the resource reservation cancellation message.

It can be learned from the foregoing descriptions that:
Because the extension header of the first IPv6 packet includes an associated channel, when a plurality of control and management functions need to be implemented for a communication network, a plurality of types of control and management messages may be carried by using the associated channel, without using a plurality of protocols to carry the plurality of control and management messages, improving efficiency of control and management on the IPv6 network.

Compared with the manners described in Example 1, Example 2, Example 3, and Example 4, the method 100 has the following technical effects:
1. An associated channel carries control and management messages of a plurality of protocols, so that a plurality of TLV fields can be carried by using one packet to reduce a quantity of packets transmitting control and management information between nodes.
2. The associated channel may be carried by using a general TLV field. TLV encapsulation is performed in an IPv6 extension header to remove other network layers such as a UDP, unifying and simplifying encapsulation and transmission of packets including control and management messages and reducing device maintenance parameters, such as a UDP port number entry.
3. Transmission of a control and management message in a TLV format with a variable value length can be supported by extension. Therefore, more channel maintenance information may be carried.
4. Message transmission is performed by using an IPv6 packet header, so that fast path processing may be performed on a device forwarding plane for content of the packet header, improving the message processing efficiency.

Compared with the manner described in Example 5, because the associated channel may be carried in a plurality of IPv6 extension headers, for example, carried in an HBH option header or a DOH, the method 100 may not only be applied to an SRv6 node, but also be applied to an IPv6 node that does not support SR.

In addition, an existing IP layer protocol does not support the MCC and the SCC. In addition, ICMPv6 can indicate diagnostic information such as path connectivity and reachability, but cannot indicate fault information of a node or a network. A BFD diagnostic word can indicate a reason why a BFD session status changes last time, that is, indicates a change of a protocol status on a control plane of a BFD protocol to a node, but cannot indicate fault information of a node or a network. The method 100 can support functions such as the MCC, the SCC, and indicating fault information of a node or a network. When a node needs to support a new upper layer protocol, control and management information required by the upper layer protocol may be carried by using the associated channel, without re-designing a new upper layer protocol. Therefore, the protocol scalability is good, and a quantity of node protocols and the maintenance complexity are reduced.

In addition, in a plurality of different types of network convergence scenarios, the associated channel carries a plurality of types of control and management messages in an IP extension header, simplifying a protocol stack without adding another layer protocol, reducing the node implementation complexity, and improving the deployability in an industrial scenario.

As described above, the first communication apparatus may correspond to the head node on the transmission path of the first IPv6 packet, or may correspond to the intermediate node on the transmission path of the first IPv6 packet. In an example, if the first communication apparatus corresponds to the intermediate node on the transmission path of the first IPv6 packet, in an example: the first communication apparatus may receive a second IPv6 packet from an upstream node, where the second IPv6 packet includes an associated channel, and the first communication apparatus may process the second IPv6 packet based on the associated channel in the second IPv6 packet, to obtain the first IPv6 packet.

The following uses an example in which the first communication apparatus corresponds to an intermediate node 1 on the transmission path of the first IPv6 packet as an example to describe a specific implementation in which the first communication apparatus processes the second IPv6 packet based on the associated channel in the second IPv6 packet.

In an example, if the associated channel of the second IPv6 packet includes an OAM channel, that is, the associated channel of the second IPv6 packet includes an OAM message: In some embodiments: For example, the first communication apparatus may add a local timestamp of the intermediate node 1 to the second IPv6 packet, to obtain the first IPv6 packet. In another example, the first communication apparatus may add packet loss information of the intermediate node 1 to the second IPv6 packet, to obtain the first IPv6 packet. In an example, the first communication apparatus may add the timestamp and/or the packet loss information of the intermediate node 1 to an extension header of the second IPv6 packet. In an example, to avoid excessive extension of the second IPv6 packet, the timestamp and/or the packet loss information of the intermediate node 1 may be carried in a value field of a TLV carrying the OAM message. In still another example, an additional TLV may be extended in the extension header of the second IPv6 packet to carry the timestamp and/or the packet loss information of the intermediate node 1. The extension header mentioned herein includes but is not limited to an HBH option header, a DOH, and an SRH.

In another example, if the associated channel includes a fault indication channel, that is, the associated channel of the second IPv6 packet includes a fault indication message, in some embodiments, the intermediate node 1 may, for example, record fault indication information confirmed by the intermediate node 1 such as a packet loss rate and/or a bit error rate into the second IPv6 packet, to obtain the first IPv6 packet. In an example, to avoid excessive extension of the second IPv6 packet, the bit error rate and/or the packet loss rate of the intermediate node 1 may be carried in a value field of a TLV carrying the fault indication message. In still another example, an additional TLV may be extended in the extension header of the second IPv6 packet to carry the packet loss rate and/or the bit error rate of the intermediate node 1. The extension header mentioned herein includes but is not limited to an HBH option header, a DOH, and an SRH.

In still another example, if the associated channel includes a resource management channel, and the resource management channel carries a status update message, the first communication apparatus may, for example, add available resource information of the intermediate node 1 to the second IPv6 packet, to obtain the first IPv6 packet. For understanding, refer to FIG. 2d. Assuming that the intermediate node 1 corresponds to the node ID[0] shown in FIG. 2d, the first communication apparatus may record bandwidth that can be provided by the intermediate node 1 into the offered bandwidth[0] field shown in FIG. 2d, and record latency that can be provided by the intermediate node 1 into the offered latency[0] field shown in FIG. 2d.

In some embodiments, if the first communication apparatus corresponds to the intermediate node on the transmission path of the first IPv6 packet, after receiving the second IPv6 packet, the first communication apparatus may perform another operation based on at least one type of control and management message carried in a management channel of the second IPv6 packet.

For example: If the associated channel of the second IPv6 packet includes an OAM message, the first communication apparatus may further send the timestamp and/or the packet loss information of the intermediate node 1 to the controller. In another example: If the associated channel of the second IPv6 packet includes a resource reservation request message, the first communication apparatus may, for example, reserve a corresponding resource for the first path based on the resource reservation request indication. If the associated channel of the second IPv6 packet includes a resource reservation cancellation message, the first communication apparatus may, for example, release a resource reserved for the first path indicated by the resource reservation cancellation message.

In an IPv6 network, for a path such as a first path, it is particularly important to determine whether the first path is faulty. Once a node on the first path, for example, a head node or a tail node, determines that the first path is faulty, a corresponding measure may be taken, for example, path switching may be performed, to prevent the quality of service from being affected due to the faulty first path.

Currently, when the first path is faulty, a node on the first path may report an alarm to a management plane. However, after receiving the alarm, the management plane needs to manually resolve a fault on site, which is inefficient.

In view of this, an embodiment of this application provides a packet processing method. The following describes the method with reference to the accompanying drawings.

FIG. 3 is a schematic flowchart of a packet processing method according to an embodiment of this application. The packet processing method 200 shown in FIG. 3 may be executed by a first communication apparatus. The first communication apparatus may correspond to a node in an IPv6 network, for example, may be a head node or an intermediate node on a first path. The packet processing method 200 shown in FIG. 3 may include, for example, the following S201 and S202.

S201: Obtain a first IPv6 packet, where the first IPv6 packet includes a fault indication channel, and the fault indication channel records fault indication information of a first path.

If the first communication apparatus corresponds to the head node on the first path, the first communication apparatus may generate the first IPv6 packet. If the first communication apparatus corresponds to the intermediate node on the first path, the first communication apparatus may receive a second IPv6 packet from an upstream node. In an example, the second IPv6 packet also includes a fault indication channel. After receiving the second IPv6 packet, the first communication apparatus may process the second IPv6 packet to obtain the first IPv6 packet. The first path mentioned herein may be a transmission path of the first IPv6 packet. The fault indication channel included in the second IPv6 packet and mentioned herein may include, for example, fault indication information recorded in the second IPv6 packet by the upstream node of the first communication apparatus. Certainly, if the first communication apparatus corresponds to the intermediate node on the first path, the first communication apparatus may alternatively receive the first IPv6 packet from the upstream node.

In this embodiment of this application, the fault indication channel may be carried in a payload of the first IPv6 packet, or may be carried in an extension header of the first IPv6 packet. The extension header mentioned here may be an HBH option header. In other words, the HBH option header of the first IPv6 packet may include a fault indication message. In still another example, the extension header mentioned herein may be a DOH. In other words, the DOH of the first IPv6 packet may include a fault indication message. In another example, if the first IPv6 packet is an SRv6 packet, the extension header mentioned herein may be an SRH. In other words, the SRH of the first IPv6 packet may include a fault indication message.

In an example, the fault indication channel may be configured to carry a fault indication message. The fault indication message may be carried in an extended TLV. The extended TLV may be an independent TLV, and the independent TLV does not carry other types of control channels in addition to carrying a fault indication channel. The extended TLV may alternatively be a TLV carrying an associated channel. In this case, in addition to carrying a fault indication channel, the TLV may also carry another control channel. For a structure of the TLV that carries the fault indication message and fault indication information that may be carried in the fault indication message, refer to the description part of the fault indication message in the method 100, and details are not described herein.

It should be noted that, the TLV carrying the fault indication message may, for example, be carried in a value field of a TLV including an associated channel. For example, the TLV carrying the fault indication message may be carried in the value field of the TLV field shown in FIG. 2a-1 or FIG. 2a-2. For the TLV including an associated channel, refer to a related description part in the method 100, and details are not described herein.

It should be noted that, the first IPv6 packet in this embodiment of this application may be a service packet or a measurement packet. This is not specifically limited in this embodiment of this application. It may be understood that, when the first IPv6 packet is a service packet, fault indication information when an IPv6 network transmits an actual service packet may be determined. When the first IPv6 packet is a measurement packet, the fault indication information of the first path may be determined according to a requirement. For example, the fault indication information of the first path may be determined before the service packet is transmitted, to determine a transmission path that meets the quality of service of the service, ensuring the quality of service. That the first IPv6 packet is a service packet indicates that a data payload of the first IPv6 packet carries user data. If the first IPv6 packet is a measurement packet, a data payload of the first IPv6 packet does not carry user data.

S202: Forward the first IPv6 packet.

After obtaining the first IPv6 packet, the first communication apparatus may forward the first IPv6 packet. A node that receives the first IPv6 packet, for example, a tail node on the transmission path of the first IPv6 packet, may perform a corresponding operation based on the fault indication message. For an operation part performed by the node that receives the first IPv6 packet based on the fault indication information, refer to the operation part performed by the tail node based on the fault indication message in the method 100, and details are not described herein again.

It can be learned that, by using the method 200, a function of determining the fault indication information of the first path in the IPv6 network may be implemented. Specifically, the fault indication information in the first path may be quickly transmitted to another node such as a tail node on the first path through a data plane, so that when a node such as the tail node on the first path determines that the first path is faulty, corresponding measures can be quickly and efficiently taken, preventing the quality of service from being affected due to the faulty first path.

It may be understood that, in the method 200, if the TLV carrying the fault indication message is carried in the value field of the TLV including an associated channel, the first IPv6 packet carries an associated channel, where the associated channel carries different types of control channels. Each type of control channel carries at least one type of control and management message, and the different types of control and management messages include the fault indication channel. For the associated universal channel, refer to a related description part of the method 100, and details are not described herein again. Correspondingly, when the first IPv6 packet in the method 200 carries an associated channel, for a manner in which the first communication apparatus processes the associated channel, refer to a related description part in the method 100, and details are not described herein again.

An embodiment of this application further provides a packet processing method 300. Refer to FIG. 4, which is a schematic flowchart of a packet processing method according to an embodiment of this application. The method 300 shown in FIG. 4 may be performed by a tail node on a transmission path of the first IPv6 packet in the method 100. For example, the method 300 may include the following S301 and S302.

S301: Receive a first Internet Protocol version 6 IPv6 packet, where the first IPv6 packet includes an associated channel, the associated channel carries different types of control channels, and each type of control channel carries at least one type of control and management message.

S302: Perform an operation corresponding to the at least one type of control and management message.

It should be noted that, for a specific implementation of the method 300, refer to a related description part in the method 100, and details are not described herein again.

In addition, for the associated channel, the control channel, the control and management message, and the operation corresponding to the control and management message in the method 300, refer to a related description part in the method 100, and details are not described herein again.

An embodiment of this application further provides a packet processing method 400. Refer to FIG. 5, which is a schematic flowchart of a packet processing method according to an embodiment of this application. The method 400 shown in FIG. 5 may be performed by a tail node on a transmission path of the first IPv6 packet in the method 200. For example, the method 400 may include the following S401 and S402.

S401: A tail node of a first path receives a first Internet Protocol version 6 IPv6 packet, where the first IPv6 packet includes a fault indication channel, and the fault indication channel records fault indication information of the first path.

S402: Obtain the fault indication information of the first path.

It should be noted that, for a specific implementation of the method 400, refer to a related description part in the method 200, and details are not described herein again.

In addition, for the fault indication message and an operation corresponding to a control and management message in the method 400, refer to a related description part in the method 200, and details are not described herein again.

In addition, an embodiment of this application further provides a communication apparatus 600, as shown in FIG. 6. FIG. 6 is a schematic diagram of a structure of a communication apparatus according to an embodiment of this application. The communication apparatus 600 includes a transceiver unit 601 and a processing unit 602. The communication apparatus 600 may be configured to perform the method 100, the method 200, the method 300, or the method 400 in the foregoing embodiment.

In an example, the communication apparatus 600 may perform the method 100 in the foregoing embodiment. When the communication apparatus 600 is configured to perform the method 100 in the foregoing embodiment: The transceiver unit 601 is configured to perform a receiving and sending operation in the method 100 (in this application, the receiving and sending operation is an operation related to receiving and/or sending). The processing unit 602 is configured to perform an operation other than the receiving and sending operation in the method 100. For example, the processing unit 602 is configured to obtain a first IPv6 packet, where the first IPv6 packet includes an associated channel, the associated channel carries different types of control channels, and each type of control channel carries at least one type of control and management message. The transceiver unit 601 is configured to forward the first IPv6 packet.

In an example, the communication apparatus 600 may perform the method 200 in the foregoing embodiment. When the communication apparatus 600 is configured to perform the method 200 in the foregoing embodiment: The transceiver unit 601 is configured to perform a receiving and sending operation in the method 200. The processing unit 602 is configured to perform an operation other than the receiving and sending operation in the method 200. For example, the processing unit 602 is configured to obtain a first IPv6 packet, where the first IPv6 packet includes a fault indication channel, and the fault indication channel records fault indication information of a first path. The transceiver unit 601 is configured to forward the first IPv6 packet.

In an example, the communication apparatus 600 may perform the method 300 in the foregoing embodiment. When the communication apparatus 600 is configured to perform the method 300 in the foregoing embodiment: The transceiver unit 601 is configured to perform a receiving and sending operation in the method 300. The processing unit 602 is configured to perform an operation other than the receiving and sending operation in the method 300. For example, the transceiver unit 601 is configured to receive a first Internet Protocol version 6 IPv6 packet, where the first IPv6 packet includes an associated channel, the associated channel carries different types of control channels, and each type of control channel carries at least one type of control and management message. The processing unit 602 is configured to perform an operation corresponding to the at least one type of control and management message.

In an example, the communication apparatus 600 may perform the method 400 in the foregoing embodiment. When the communication apparatus 600 is configured to perform the method 400 in the foregoing embodiment: The transceiver unit 601 is configured to perform a receiving and sending operation in the method 400. The processing unit 602 is configured to perform an operation other than the receiving and sending operation in the method 400. For example, the transceiver unit 601 is configured to receive a first Internet Protocol version 6 IPv6 packet, where the first IPv6 packet includes a fault indication channel, and the fault indication channel records fault indication information of a first path. The processing unit 602 is configured to obtain the fault indication information of the first path.

In addition, an embodiment of this application further provides a communication apparatus 700, as shown in FIG. 7. FIG. 7 is a schematic diagram of a structure of a communication apparatus according to an embodiment of this application. The communication apparatus 700 includes a communication interface 701 and a processor 702 connected to the communication interface 701. The communication apparatus 700 may be configured to perform the method 100, the method 200, the method 300, or the method 400 in the foregoing embodiment.

In an example, the communication apparatus 700 may perform the method 100 in the foregoing embodiment. When the communication apparatus 700 is configured to perform the method 100 in the foregoing embodiment: The communication interface 701 is configured to perform a receiving and sending operation in the method 100. The processor 702 is configured to perform an operation other than the receiving and sending operation in the method 100. For example, the processor 702 is configured to obtain a first IPv6 packet, where the first IPv6 packet includes an associated channel, the associated channel carries different types of control channels, and each type of control channel carries at least one type of control and management message. The communication interface 701 is configured to forward the first IPv6 packet.

In an example, the communication apparatus 700 may perform the method 200 in the foregoing embodiment. When the communication apparatus 700 is configured to perform the method 200 in the foregoing embodiment: The communication interface 701 is configured to perform a receiving and sending operation in the method 200. The processor 702 is configured to perform an operation other than the receiving and sending operation in the method 200. For example, the processor 702 is configured to obtain a first IPv6 packet, where the first IPv6 packet includes a fault indication channel, and the fault indication channel records fault indication information of a first path. The communication interface 701 is configured to forward the first IPv6 packet.

In an example, the communication apparatus 700 may perform the method 300 in the foregoing embodiment. When the communication apparatus 700 is configured to perform the method 300 in the foregoing embodiment: The communication interface 701 is configured to perform a receiving and sending operation in the method 300. The processor 702 is configured to perform an operation other than the receiving and sending operation in the method 300. For example, the communication interface 701 is configured to receive a first Internet Protocol version 6 IPv6 packet, where the first IPv6 packet includes an associated channel, the associated channel carries different types of control channels, and each type of control channel carries at least one type of control and management message. The processor 702 is configured to perform an operation corresponding to the at least one type of control and management message.

In an example, the communication apparatus 700 may perform the method 400 in the foregoing embodiment. When the communication apparatus 700 is configured to perform the method 400 in the foregoing embodiment: The communication interface 701 is configured to perform a receiving and sending operation in the method 400. The processor 702 is configured to perform an operation other than the receiving and sending operation in the method 400. For example, the communication interface 701 is configured to receive a first Internet Protocol version 6 IPv6 packet, where the first IPv6 packet includes a fault indication channel, and the fault indication channel records fault indication information of a first path. The processor 702 is configured to obtain the fault indication information of the first path.

In addition, an embodiment of this application further provides a communication apparatus 800, as shown in FIG. 8. FIG. 8 is a schematic diagram of a structure of a communication apparatus according to an embodiment of this application.

The communication apparatus 800 may be configured to perform the method 100, the method 200, the method 300, or the method 400 in the foregoing embodiment.

As shown in FIG. 8, the communication apparatus 800 may include a processor 810, a memory 820 coupled to the processor 810, and a transceiver 830. The transceiver 830 may be, for example, a communication interface, an optical module, or the like. The processor 810 may be a central processing unit (central processing unit, CPU), a network processor (network processor, NP), or a combination of a CPU and an NP. Alternatively, the processor may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), generic array logic (generic array logic, GAL), or any combination thereof. The processor 810 may be one processor, or may include a plurality of processors. The memory 820 may include a volatile memory (volatile memory), for example, a random access memory (random access memory, RAM). The memory may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 820 may further include a combination of the foregoing types of memories. The memory 820 may be one memory, or may include a plurality of memories. In an implementation, the memory 820 stores computer-readable instructions, and the computer-readable instructions include a plurality of software modules, for example, a sending module 821, a processing module 822, and a receiving module 823. After executing each software module, the processor 810 may perform a corresponding operation based on an indication of each software module. In this embodiment, an operation performed by a software module actually is an operation performed by the processor 810 based on an indication of the software module.

In an example, the communication apparatus 800 may perform the method 100 in the foregoing embodiment. When the communication apparatus 800 is configured to perform the method 100 in the foregoing embodiment: The transceiver 830 is configured to perform a receiving and sending operation in the method 100. The processor 810 is configured to perform an operation other than the receiving and sending operation in the method 100. For example, the processor 810 is configured to obtain a first IPv6 packet, where the first IPv6 packet includes an associated channel, the associated channel carries different types of control channels, and each type of control channel carries at least one type of control and management message. The transceiver 830 is configured to forward the first IPv6 packet.

In an example, the communication apparatus 800 may perform the method 200 in the foregoing embodiment. When the communication apparatus 800 is configured to perform the method 200 in the foregoing embodiment: The transceiver 830 is configured to perform a receiving and sending operation in the method 200. The processor 810 is configured to perform an operation other than the receiving and sending operation in the method 200. For example, the processor 810 is configured to obtain a first IPv6 packet, where the first IPv6 packet includes a fault indication channel, and the fault indication channel records fault indication information of a first path. The transceiver 830 is configured to forward the first IPv6 packet.

In an example, the communication apparatus 800 may perform the method 300 in the foregoing embodiment. When the communication apparatus 800 is configured to perform the method 300 in the foregoing embodiment: The transceiver 830 is configured to perform a receiving and sending operation in the method 300. The processor 810 is configured to perform an operation other than the receiving and sending operation in the method 300. For example, the transceiver 830 is configured to receive a first Internet Protocol version 6 IPv6 packet, where the first IPv6 packet includes an associated channel, the associated channel carries different types of control channels, and each type of control channel carries at least one type of control and management message. The processor 810 is configured to perform an operation corresponding to the at least one type of control and management message.

In an example, the communication apparatus 800 may perform the method 400 in the foregoing embodiment. When the communication apparatus 800 is configured to perform the method 400 in the foregoing embodiment: The transceiver 830 is configured to perform a receiving and sending operation in the method 400. The processor 810 is configured to perform an operation other than the receiving and sending operation in the method 400. For example, the transceiver 830 is configured to receive a first Internet Protocol version 6 IPv6 packet, where the first IPv6 packet includes a fault indication channel, and the fault indication channel records fault indication information of a first path. The processor 810 is configured to obtain the fault indication information of the first path.

This application further provides a computer-readable storage medium. The computer-readable storage medium stores instructions. When the instructions are run on a computer, the computer is enabled to perform any one or more operations in the method (for example, the method 100, the method 200, the method 300, and the method 400) in any one of the foregoing embodiments.

This application further provides a computer program product, including a computer program. When the computer program is run on a computer, the computer is enabled to perform any one or more operations in the method (for example, the method 100, the method 200, the method 300, and the method 400) in any one of the foregoing embodiments.

This application further provides a communication system, including the communication apparatus for executing the method 100 and the communication apparatus for executing the method 300 that are mentioned in the foregoing embodiments.

This application further provides a communication system, including the communication apparatus for executing the method 200 and the communication apparatus for executing the method 400 that are mentioned in the foregoing embodiments.

This application further provides a communication system, including at least one memory and at least one processor, where the at least one memory stores instructions, and the at least one processor executes the instructions, so that the communication system performs any one or more operations in the method 100 and any one or more operations in the method 300 in the foregoing embodiments of this application.

This application further provides a communication system, including at least one memory and at least one processor, where the at least one memory stores instructions, and the at least one processor executes the instructions, so that the communication system performs any one or more operations in the method 200 and any one or more operations in the method 400 in the foregoing embodiments of this application.

In the specification, claims, and accompanying drawings of this application, the terms "first", "second", "third", "fourth", and the like (if existing) are used for distinguishing similar objects, but do not need to be used for describing a specific sequence or order. It should be understood that, data used in this way may be interchanged in a proper circumstance, so that embodiments of this application described herein can be implemented in a sequence different from those shown in the drawings or described herein. In addition, the terms "include" and "have" and any variant thereof are intended to cover non-exclusive inclusion. For example, a process, method, system, product, or device that includes a series of steps or units does not need to be limited to those steps or units clearly listed, but may include other steps or units that are not clearly listed or are inherent to the process, method, product, or device.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical service division and there may be other division manners during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and components displayed as units may or may not be physical units, that is, may be located in one position, or may be distributed on a plurality of network units. Some or all of the units may be selected according to an actual requirement to achieve the objectives of the solutions of the embodiments.

In addition, service units in embodiments of this application may be integrated into one processing unit, or each of the units may exist alone physically, or two or more units are integrated into one unit. The integrated unit may be implemented in the form of hardware, or may be implemented in the form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium, and includes several instructions for instructing a computer device (which may be a personal computer, a server, a network device, and the like) to perform all or some of the steps of the method described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disk.

A person skilled in the art should be aware that, in the foregoing one or more examples, the service described in the present invention may be implemented by using hardware, software, firmware, or any combination thereof. When the service is implemented by using software, the service may be stored in a computer-readable medium or transmitted as one or more instructions or codes on a computer-readable medium. The computer-readable medium includes a computer storage medium and a communication medium, where the communication medium includes any medium that facilitates transmission of a computer program from one place to another. The storage medium may be any available medium that can be accessed by a general-purpose or dedicated computer.

The objectives, technical solutions, and beneficial effects of the present invention are further described in detail in the foregoing specific implementations. It should be understood that the foregoing is merely specific implementations of the present invention.

The foregoing embodiments are merely used for describing the technical solutions of this application, but are not intended to limit the technical solutions. Although this application is described in detail with reference to the foregoing embodiments, a person of ordinary skill in the art should understand that: modifications may still be made to the technical solutions described in the foregoing embodiments, or equivalent replacements may be made to the part of the technical features, without departing from the scope of the technical solutions in embodiments of this application.

## Claims

1. A packet processing method performed by a head node or an intermediate node on a first path, wherein the first path is a transmission path of a first Internet Protocol version 6, IPv6, packet and the method comprises:
obtaining (S201) the first IPv6 packet, wherein the first IPv6 packet comprises an associated channel, the associated channel carries different types of control channels, and each type of control channel carries at least one type of control and management message; and
forwarding (S202) the first IPv6 packet;
**characterized in that**:
the first IPv6 packet is a segment routing Internet Protocol version 6, SRv6, packet;
wherein the first IPv6 packet comprises identification information, the identification information is used for identifying the first path;
wherein a segment list or a path segment of the SRv6 packet carries the identification information.

2. A packet processing method performed by a tail node on a first path, wherein the first path is a transmission path of a first Internet Protocol version 6, IPv6, packet and the method comprises:
receiving (S301) the first IPv6 packet, wherein the first IPv6 packet comprises an associated channel, the associated channel carries different types of control channels, and each type of control channel carries at least one type of control and management message; and
obtaining (S302) the at least one type of control and management message;
**characterized in that**:
the first IPv6 packet is a segment routing Internet Protocol version 6, SRv6, packet;
wherein the first IPv6 packet comprises identification information, the identification information is used for identifying a first path;
wherein a segment list or a path segment of the SRv6 packet carries the identification information.

3. The method according to claim 1 or 2, wherein the first IPv6 packet comprises indication information, and the indication information indicates the associated channel.

4. The method according to claim 3, wherein the indication information is carried in a type length value, TLV, field, and a type field of the TLV field carries the indication information.

5. The method according to claim 4, wherein the TLV field comprises a channel type field, and the channel type field indicates a type of a control channel carried by the associated channel.

6. The method according to any one of claims 1 to 5, wherein the associated channel is carried in an extension header of the first IPv6 packet, and the extension header is a segment routing header, SRH.

7. The method according to any one of claims 1 to 6, wherein the identification information is used by a node on the first path to identify an association relationship between the associated channel and the first path.

8. The method according to any one of claims 1 to 7, wherein the different types of control channels comprise any one or more of the following:
an operation, administration and maintenance, OAM, channel, a fault indication channel, a resource management channel, a signaling communication channel, SCC, and a management communication channel, MCC.

9. The method according to claim 8, wherein a control and management message carried by the fault indication channel records fault indication information.

10. The method according to any one of claim 1 or claims 3 to 9, wherein the obtaining a first IPv6 packet comprises:
receiving a second IPv6 packet, wherein the second IPv6 packet comprises an associated channel; and
processing the second IPv6 packet based on the associated channel in the second IPv6 packet, to obtain the first IPv6 packet.

11. A communication apparatus, configured to perform the method according to any one of claims 1 to 10.

## Patentansprüche

1. Paketverarbeitungsverfahren, das durch einen Kopfknoten oder einen Zwischenknoten auf einem ersten Pfad durchgeführt wird, wobei der erste Pfad ein Übertragungspfad eines ersten Internet-Protocol-Version-6-Pakets, IPv6-Pakets, ist und das Verfahren Folgendes umfasst:
Erlangen (S201) des ersten IPv6-Pakets, wobei das erste IPv6-Paket einen verknüpften Kanal umfasst, der verknüpfte Kanal unterschiedliche Arten von Steuerkanälen enthält und jede Art von Steuerkanal mindestens eine Art von Steuer- und Verwaltungsnachricht enthält; und
Weiterleiten (S202) des ersten IPv6-Pakets;
**dadurch gekennzeichnet, dass**:
das erste IPv6-Paket ein Segment-Routing-Internet-Protocol-Version-6-Paket, SRv6-Paket, ist;
wobei das erste IPv6-Paket Identifikationsinformationen umfasst und die Identifikationsinformationen zum Identifizieren des ersten Pfads verwendet werden;
wobei eine Segmentliste oder ein Pfadsegment des SRv6-Pakets die Identifikationsinformationen enthält.

2. Paketverarbeitungsverfahren, das durch einen Endknoten auf einem ersten Pfad durchgeführt wird, wobei der erste Pfad ein Übertragungspfad eines ersten Internet-Protocol-Version-6-Pakets, IPv6-Pakets, ist und das Verfahren Folgendes umfasst:
Empfangen (S301) des ersten IPv6-Pakets, wobei das erste IPv6-Paket einen verknüpften Kanal umfasst, der verknüpfte Kanal unterschiedliche Arten von Steuerkanälen enthält und jede Art von Steuerkanal mindestens eine Art von Steuer- und Verwaltungsnachricht enthält; und
Erlangen (S302) des mindestens einen Typs von Steuer- und Verwaltungsnachricht;
**dadurch gekennzeichnet, dass**:
das erste IPv6-Paket ein Segment-Routing-Internet-Protocol-Version-6-Paket, SRv6-Paket, ist;
wobei das erste IPv6-Paket Identifikationsinformationen umfasst und die Identifikationsinformationen zum Identifizieren eines ersten Pfads verwendet werden;
wobei eine Segmentliste oder ein Pfadsegment des SRv6-Pakets die Identifikationsinformationen enthält.

3. Verfahren nach Anspruch 1 oder 2, wobei das erste IPv6-Paket Angabeinformationen umfasst und die Angabeinformationen den verknüpften Kanal angeben.

4. Verfahren nach Anspruch 3, wobei die Angabeinformationen in einem Typlängenwert-Feld, TLV-Feld enthalten sind und ein Typfeld des TLV-Felds die Angabeinformationen enthält.

5. Verfahren nach Anspruch 4, wobei das TLV-Feld ein Kanaltypfeld umfasst und das Kanaltypfeld einen Typ eines Steuerkanals angibt, der in dem verknüpften Kanal enthalten ist.

6. Verfahren nach einem der Ansprüche 1 bis 5, wobei der verknüpfte Kanal in einem Erweiterungsheader des ersten IPv6-Pakets enthalten ist und der Erweiterungsheader ein Segment Routing Header, SRH, ist.

7. Verfahren nach einem der Ansprüche 1 bis 6, wobei die Identifikationsinformationen durch einen Knoten auf dem ersten Pfad verwendet werden, um eine Zuordnungsbeziehung zwischen dem verknüpften Kanal und dem ersten Pfad zu identifizieren.

8. Verfahren nach einem der Ansprüche 1 bis 7, wobei die verschiedenen Arten von Steuerkanälen einen beliebigen oder mehrere beliebige der Folgenden umfassen:
einen Betriebs-, Administrations- und Wartungskanal, OAM-Kanal, einen Fehlerangabekanal, einen Ressourcenverwaltungskanal, einen Signalisierungskommunikationskanal, SCC, und einen Verwaltungskommunikationskanal, MCC.

9. Verfahren nach Anspruch 8, wobei eine Steuer- und Verwaltungsnachricht, die in dem Fehlerangabekanal enthalten ist, Fehlerangabeinformationen aufzeichnet.

10. Verfahren nach einem der Ansprüche 1 oder 3 bis 9, wobei das Erlangen eines ersten IPv6-Pakets Folgendes umfasst:
Empfangen eines zweiten IPv6-Pakets, wobei das zweite IPv6-Paket einen verknüpften Kanal umfasst; und
Verarbeiten des zweiten IPv6-Pakets basierend auf dem verknüpften Kanal in dem zweiten IPv6-Paket, um das erste IPv6-Paket zu erlangen.

11. Kommunikationseinrichtung, die dazu konfiguriert ist, das Verfahren nach einem der Ansprüche 1 bis 10 durchzuführen.

## Revendications

1. Procédé de traitement de paquets exécuté par un nœud principal ou un nœud intermédiaire sur un premier chemin, dans lequel le premier chemin est un chemin de transmission d'un premier paquet de Protocole Internet version 6, IPv6, et le procédé comprend :
l'obtention (S201) du premier paquet IPv6, dans lequel le premier paquet IPv6 comprend un canal associé, le canal associé transporte différents types de canaux de commande, et chaque type de canal de commande transporte au moins un type de message de commande et de gestion ; et
la transmission (S202) du premier paquet IPv6 ;
**caractérisé en ce que** :
le premier paquet IPv6 est un paquet de routage de segment de Protocole Internet version 6, SRv6 ;
dans lequel le premier paquet IPv6 comprend des informations d'identification, les informations d'identification sont utilisées pour identifier le premier chemin ;
dans lequel une liste de segments ou un segment de chemin du paquet SRv6 transporte les informations d'identification.

2. Procédé de traitement de paquets exécuté par un dernier nœud sur un premier chemin, dans lequel le premier chemin est un chemin de transmission d'un premier paquet de Protocole Internet version 6, IPv6, et le procédé comprend :
la réception (S301) du premier paquet IPv6, dans lequel le premier paquet IPv6 comprend un canal associé, le canal associé transporte différents types de canaux de commande, et chaque type de canal de commande transporte au moins un type de message de commande et de gestion ; et
l'obtention (S302) de l'au moins un type de message de commande et de gestion ;
**caractérisé en ce que** :
le premier paquet IPv6 est un paquet de routage de segment de Protocole Internet version 6, SRv6 ;
dans lequel le premier paquet IPv6 comprend des informations d'identification, les informations d'identification sont utilisées pour identifier un premier chemin ;
dans lequel une liste de segments ou un segment de chemin du paquet SRv6 transporte les informations d'identification.

3. Procédé selon la revendication 1 ou 2, dans lequel le premier paquet IPv6 comprend des informations d'indication, et les informations d'indication indiquent le canal associé.

4. Procédé selon la revendication 3, dans lequel les informations d'indication sont transportées dans un champ de valeur de longueur de type, TLV, et un champ de type du champ TLV transporte les informations d'indication.

5. Procédé selon la revendication 4, dans lequel le champ TLV comprend un champ de type de canal, et le champ de type de canal indique un type d'un canal de commande transporté par le canal associé.

6. Procédé selon l'une quelconque des revendications 1 à 5, dans lequel le canal associé est transporté dans un en-tête d'extension du premier paquet IPv6, et l'en-tête d'extension est un en-tête de routage de segment, SRH.

7. Procédé selon l'une quelconque des revendications 1 à 6, dans lequel les informations d'identification sont utilisées par un nœud sur le premier chemin pour identifier une relation d'association entre le canal associé et le premier chemin.

8. Procédé selon l'une quelconque des revendications 1 à 7, dans lequel les différents types de canaux de commande comprennent un quelconque ou plusieurs des éléments suivants :
un canal d'exploitation, d'administration et de maintenance, OAM, un canal d'indication de défaut, un canal de gestion de ressources, un canal de communication de signalisation, SCC, et un canal de communication de gestion, MCC.

9. Procédé selon la revendication 8, dans lequel un message de commande et de gestion transporté par le canal d'indication de défaut enregistre des informations d'indication de défaut.

10. Procédé selon l'une quelconque de la revendication 1 ou des revendications 3 à 9, dans lequel l'obtention d'un premier paquet IPv6 comprend :
la réception d'un second paquet IPv6, dans lequel le second paquet IPv6 comprend un canal associé ; et
le traitement du second paquet IPv6 sur la base du canal associé dans le second paquet IPv6, pour obtenir le premier paquet IPv6.

11. Appareil de communication, configuré pour exécuter le procédé selon l'une quelconque des revendications 1 à 10.
